(19) **Europäisches Patentamt**
**European Patent Office**
**Office européen des brevets**

(11) **EP 4 105 292 A1**

(12) # EUROPEAN PATENT APPLICATION
published in accordance with Art. 153(4) EPC

(43) Date of publication:
**21.12.2022 Bulletin 2022/51**

(21) Application number: **21753440.3**

(22) Date of filing: **10.02.2021**

(51) International Patent Classification (IPC):
*C09J 11/06* (2006.01)  *C09J 167/00* (2006.01)
*C09J 167/02* (2006.01)  *C09J 167/03* (2006.01)
*C09J 175/06* (2006.01)  *C09J 7/38* (2018.01)

(52) Cooperative Patent Classification (CPC):
**C09J 7/38; C09J 11/06; C09J 167/00;
C09J 167/02; C09J 167/03; C09J 175/06**

(86) International application number:
**PCT/JP2021/005053**

(87) International publication number:
**WO 2021/162056 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.02.2020 JP 2020022567
30.09.2020 JP 2020166218
30.09.2020 JP 2020165308**

(71) Applicant: **Mitsubishi Chemical Corporation
Chiyoda-ku
Tokyo 100-8251 (JP)**

(72) Inventors:
• **SUZUKI, Hideaki
Tokyo 100-8251 (JP)**
• **KUSANO, Kazunao
Tokyo 100-8251 (JP)**

(74) Representative: **Kuhnen & Wacker
Patent- und Rechtsanwaltsbüro PartG mbB
Prinz-Ludwig-Straße 40A
85354 Freising (DE)**

(54) **ADHESIVE COMPOSITION, ADHESIVE, ADHESIVE SHEET, AND DOUBLE-SIDED ADHESIVE SHEET**

(57)    An adhesive composition is provided, which is prepared by using a regenerated material friendly to the global environment, and is excellent in adhesive properties with respect to various adherends and excellent in adhesive force, cohesive force, and other adhesive properties. The adhesive composition contains a polyester resin (A), wherein the polyester resin (A) contains a structural unit derived from at least one compound (a1) selected from the group consisting of a dimer acid compound and a dimer diol, and a structural unit derived from an aromatic compound (a2), wherein the ratio (X1/X2) of the molar concentration (X1) of the structural unit derived from the compound (a1) to the molar concentration (X2) of the structural unit derived from the aromatic compound (a2) is greater than 1.0.

EP 4 105 292 A1

**Description**

TECHNICAL FIELD

The present disclosure relates to an adhesive composition containing a polyester resin, and further relates to an adhesive agent, an adhesive sheet, and a double-sided adhesive sheet. More specifically, the present disclosure relates to an adhesive composition which contains a polyester resin and is produced by using a plant-derived material friendly to the global environment and, when being used for an adhesive agent, has excellent adhesive force, holding force, and other adhesive properties, and relates to an adhesive agent, an adhesive sheet, and a double-sided adhesive sheet.

BACKGROUND ART

In recent years, adhesive agents have been used for bonding components from the viewpoint of size reduction and weight reduction of products. An adhesive agent prepared by using a highly adhesive polyester resin instead of an ordinary acrylic resin is also under consideration as such an adhesive agent.

On the other hand, it is recommended to use plant-derived materials as renewable resources in order to cope with recent global warming, depletion of fossil resources, and the like. To this end, there is a demand for an adhesive agent prepared by using a plant-derived material that is friendly to the global environment and has a higher biomass degree.

As an exemplary polyester adhesive agent prepared using such a plant-derived material, PTL 1 proposes an adhesive agent which contains a polyester resin prepared through polymerization by using 90 to 50 mol % of an aromatic dicarboxylic acid and 10 to 50 mol % of a dimer acid as a dicarboxylic acid component and using 30 mol % or more of a glycol having an alkyl group in its side chain and having a carbon number of 4 or more as a glycol component. PTL 1 states that the adhesive agent demonstrates excellent heat resistance and durability.

Further, PTL 2 proposes an adhesive agent which contains a polyester and a tackifier, wherein the polyester is prepared through polymerization by using a dimer acid as a dicarboxylic acid component and using a dimer diol as a diol component, and the diol component contains 1.04 to 2.10 mols of hydroxyl groups per mol of carboxyl groups contained in the dicarboxylic acid component. PTL 2 states that the adhesive agent allows for thick coating with the use of a smaller amount of an organic solvent, and has excellent adhesiveness, holding property, and repulsion resistance.

RELATED ART DOCUMENTS

PATENT DOCUMENTS

PTL 1: JP-A-HEI4(1992)-328186
PTL 2: JP-A-2014-169419

SUMMARY

In the art disclosed in PTL 1, the plant-derived dimer acid is used. However, the aromatic dicarboxylic acid, which is derived from petroleum, is used in a greater amount, thereby problematically increasing the environmental load.

In the art disclosed in PTL 2, the plant-derived material is mainly used, thereby reducing the environmental load. However, the resin is liable to be excessively soft and hence have an excessively low elastic modulus when being used for an adhesive sheet. Therefore, a double-sided adhesive tape produced from the adhesive agent tends to be poorer in adhesive force and other adhesive properties, and is still unsatisfactory. Further, the addition of the tackifier and the like increases the adhesive force to improve the adhesive properties. However, the design flexibility is problematically reduced, because the number of the essential components is increased.

In general, where a polyester resin is used for an adhesive agent, a curing agent such as isocyanate compound, epoxy compound or metal chelate compound, a tackifier, and other additives are often used.

Where a polyester resin composition is prepared by using a plant-derived material friendly to the global environment (e.g., a dimer acid compound or a dimer diol having a longer alkyl chain), the polyester resin composition tends to be less compatible with the aforementioned additives because of its very low polarity. Where any of the additives are used for the polyester resin composition prepared with the longer alkyl chain-containing dimer acid compound or dimer diol, therefore, the resulting polyester resin composition is problematically liable to be poorer in compatibility and adhesive properties.

In view of the foregoing, the present disclosure provides an adhesive composition which is prepared by using a regenerated material friendly to the global environment (e.g., a plant-derived material, a recycled polyethylene terephthalate (PET) or the like) and is excellent in adhesive properties with respect to various adherends and has excellent adhesive force, holding force, and other adhesive properties. The present disclosure also provides an adhesive agent, an adhesive sheet, and a double-sided adhesive sheet.

The inventors of the present disclosure found that where an adhesive composition contains a polyester resin prepared from an aromatic compound and at least one compound selected from a dimer acid compound and a dimer diol as a polycarboxylic acid compound and a polyol, and the amount of the at least one compound selected from the dimer acid compound and the dimer diol is greater than the amount of the aromatic compound in the polyester resin, the adhesive composition is friendly to the global environment and can provide an adhesive agent with excellent adhesive properties with respect to various adherends and adhesive force and holding force. Thus, the inventors achieved the present disclosure.

The present disclosure has the following features [1] to [15]:

[1] A polyester resin composition containing a polyester resin (A), wherein the polyester resin (A) contains a structural unit derived from at least one compound (a1) selected from the group consisting of a dimer acid compound and a dimer diol, and a structural unit derived from an aromatic compound (a2), wherein the ratio (X1/X2) of the molar concentration (X1) of the structural unit derived from the compound (a1) to the molar concentration (X2) of the structural unit derived from the aromatic compound (a2) is greater than 1.0.

[2] In the adhesive composition described in Item [1], the ratio (X1/X2) is 1.8 or more.

[3] In the adhesive composition described in Item [1] or [2], the aromatic compound (a2) comprises an aromatic polycarboxylic acid compound.

[4] In the adhesive composition described in any one of Items [1] to [3], the aromatic compound (a2) contains a terephthalic acid compound derived from polyethylene terephthalate.

[5] In the adhesive composition described in any one of Items [1] to [4], the polyester resin (A) has a number-average molecular weight of 3,000 or more.

[6] In the adhesive composition described in any one of Items [1] to [5], the polyester resin (A) has a weight-average molecular weight of 10,000 or more.

[7] The adhesive composition described in any one of Items [1] to [6] further contains 2 to 200 parts by weight of a tackifier (D) based on 100 parts by weight of the polyester resin (A).

[8] In the adhesive composition described in Item [7], the tackifier (D) has a softening point of 80°C to 170°C.

[9] In the adhesive composition described in Item [7] or [8], the tackifier (D) contains an aromatic structural unit.

[10] The adhesive composition described in any one of Items [1] to [9] further contains a polyisocyanate compound (B) .

[11] The adhesive composition described in any one of Items [1] to [10] further contains a hydrolysis inhibitor (C) .

[12] The adhesive composition described in any one of Items [1] to [11] has a biomass degree of 50% or more.

[13] An adhesive agent prepared by cross-linking the adhesive composition described in any one of Items [1] to [12].

[14] An adhesive sheet having an adhesive agent layer containing the adhesive agent described in Item [13].

[15] A double-sided adhesive sheet having an adhesive agent layer containing the adhesive agent described in Item [13] .

The adhesive composition according to the present disclosure contains the polyester resin (A). The polyester resin (A) contains the structural unit derived from the at least one compound (a1) selected from the dimer acid compound and the dimer diol and the structural unit derived from the aromatic compound (a2). In the polyester resin (A), the ratio (X1/X2) of the molar concentration (X1) of the structural unit derived from the compound (a1) to the molar concentration (X2) of the structural unit derived from the aromatic compound (a2) is greater than 1.0. Therefore, the adhesive agent is friendly to the global environment with a higher biomass degree, and yet is excellent in adhesive force and holding force.

Therefore, the adhesive composition is effectively used for a single-sided or double-sided adhesive sheet for bonding optical components and for a single-sided or double-sided adhesive sheet for fixing components of mobile electronic devices and for fixing electronic components.

DESCRIPTION OF EMBODIMENTS

Preferred embodiments of the present disclosure will hereinafter be described in detail by way of examples.

In the present disclosure, the term "carboxylic acid compound" is intended to include not only carboxylic acids but also carboxylic acid derivatives such as carboxylic acid salts, carboxylic acid anhydrides, carboxylic acid halides, and carboxylic acid esters.

An adhesive composition according to the present disclosure contains a polyester resin (A), which contains a structural unit derived from at least one compound (a1) selected from a dimer acid compound and a dimer diol, and a structural unit derived from an aromatic compound (a2), wherein the ratio (X1/X2) of the molar concentration (X1) of the structural unit derived from the compound (a1) to the molar concentration (X2) of the structural unit derived from the aromatic compound (a2) is greater than 1.0. The polyester resin (A) will hereinafter be described in detail.

<Polyester Resin (A)>

The polyester resin generally has a resin structure including a structural unit derived from a polycarboxylic acid compound and a structural unit derived from a polyol, and is typically prepared by polymerizing a polymerization component including the polycarboxylic acid compound and the polyol.

The polyester resin (A) to be used in the present disclosure contains a structural unit derived from at least one compound (a1) selected from a dimer acid compound as the polycarboxylic acid compound and a dimer diol as the polyol, and a structural unit derived from at least one aromatic compound (a2) selected from an aromatic polycarboxylic acid compound and an aromatic polyol. Specifically, the polyester resin (A) is prepared by polymerizing a polymerization component including the at least one compound (a1) selected from the dimer acid compound and the dimer diol, and the aromatic compound (a2).

[At least one compound (a1) selected from dimer acid compound and dimer diol]

As described above, the at least one compound (a1) selected from the dimer acid compound and the dimer diol (hereinafter referred to simply as "compound (a1)") is at least one selected from the dimer acid compound as the polycarboxylic acid compound and the dimer diol as the polyol.

The dimer acid compound contains as a main component a dimer of an unsaturated fatty acid compound having an average carbon number of 10 to 26, preferably a dimer of an unsaturated fatty acid compound having an average carbon number of 12 to 24, more preferably a dimer of an unsaturated fatty acid compound having an average carbon number of 14 to 22. Specific examples of the dimer acid compound include dicarboxylic acids derived from unsaturated fatty acid compounds such as oleic acid compound, linoleic acid compound, linolenic acid compound, and erucic acid compound.

The term "main component" herein means that the component is present in a proportion of 90 wt.% or more, preferably 95 wt.% or more, more preferably 98 wt.%.

Examples of the dimer acid compound to be used in the present disclosure include a dimer acid compound derived from any of the aforementioned unsaturated fatty acid compounds (and mainly having a carbon number of 36 or 44) and a hydrogenation product of the dimer acid compound. Particularly, the hydrogenation product of the dimer acid compound is preferred because the crystallinity can be easily prevented.

Typical examples of a material for the dimer acid compound include plants and beef tallow. In the present disclosure, dimer acid compounds prepared from any of these materials are usable, but plant-derived materials friendly to the global environment are preferably used. The use of any of the plant-derived materials increases the biomass degree of the polyester resin (A) to be described later.

Where the dimer acid compound is used as the copolymerization component for the polyester resin (A), the proportion of the dimer acid compound is preferably 10 to 100 mol %, particularly preferably 20 to 99 mol %, more preferably 35 to 90 mol %, especially preferably 51 to 80 mol %, based on the overall amount of the polycarboxylic acid compound. If the proportion of the dimer acid compound is excessively small, the polyester resin (A) tends to be excessively hard, thereby reducing the adhesive strength. If the proportion of the dimer acid compound is excessively great, the polyester resin (A) tends to be excessively soft, thereby slightly deteriorating the adhesive properties.

The dimer diol to be used in the present disclosure is typically a diol derived from the dimer acid compound. In the present disclosure, a plant-derived material is preferably used for the dimer diol as for the dimer acid compound.

Where the dimer diol is used as the copolymerization component for the polyester resin (A), the proportion of the dimer diol is preferably 5 to 100 mol %, particularly preferably 10 to 80 mol %, more preferably 15 to 50 mol %, based on the overall amount of the polyol. If the proportion of the dimer diol is excessively small, the adhesive properties tend to be deteriorated. If the proportion of the dimer diol is excessively great, the polyester resin (A) tends to be excessively soft, thereby slightly deteriorating the adhesive properties.

[Aromatic Compound (a2)]

Usable as the aromatic compound (a2) are an aromatic polycarboxylic acid compound and an aromatic polyol. Particularly, the aromatic polycarboxylic acid compound is preferably used as the aromatic compound (a2) for excellent adhesive force and holding force.

(Aromatic Polycarboxylic Acid Compound)

Examples of the aromatic polycarboxylic acid compound include divalent aromatic dicarboxylic acid compound and trivalent or higher-valent aromatic polycarboxylic acid compound. The aromatic dicarboxylic acid compound is preferably used because the polyester resin can be stably prepared.

Examples of the aromatic dicarboxylic acid compound include: benzene ring-containing aromatic dicarboxylic acid compounds such as phthalic acid compound, terephthalic acid compound, isophthalic acid compound, benzylmalonic acid compound, diphenic acid compound, 4,4'-oxydibenzoic acid compound, 1,8-naphthalenedicarboxylic acid compound, 2,3-naphthalenedicarboxylic acid compound, 2,7-naphthalenedicarboxylic acid compound, and other naphthalenedicarboxylic acid compounds; and heterocyclic dicarboxylic acid compounds such as furandicarboxylic acid compound and thiophenedicarboxylic acid compound (pyrrole, pyrazole, imidazole, pyridine, pyridazine, pyrimidine, pyrazine or the like). Each of these may be used alone, or two or more of these may be used in combination. Particularly, the terephthalic acid compound, the isophthalic acid compound, and the furandicarboxylic acid compound are preferred from the viewpoint of easy availability.

Examples of the trivalent or higher-valent aromatic polycarboxylic acid compound include trimellitic acid compound, pyromellitic acid compound, and trimesic acid compound. These may be each used alone, or two or more of these may be used in combination.

It is also preferred to use polyethylene terephthalate as the aromatic polycarboxylic acid compound.

The polyethylene terephthalate is a polyester resin prepared by polymerizing a terephthalic acid compound and ethylene glycol. With the use of the polyethylene terephthalate, the polyester resin (A) contains a terephthalic acid structure derived from the polyethylene terephthalate as the structural unit derived from the aromatic compound (a2).

As required, the polyethylene terephthalate may be modified with a substance such as isophthalic acid compound, phthalic anhydride compound, adipic acid compound, cyclohexanedicarboxylic acid compound, sebacic acid compound, 1,3-butanediol, 1,4-butanediol or cyclohexanedimethanol. The polyethylene terephthalate may be virgin polyethylene terephthalate or recycled polyethylene terephthalate. From the viewpoint of the global environment, it is preferred to use the recycled polyethylene terephthalate.

Where the aromatic polycarboxylic acid compound is used as the copolymerization component for the polyester resin (A), the proportion of the aromatic polycarboxylic acid compound is preferably 1 mol % or more and less than 50 mol %, more preferably 5 to 47 mol %, still more preferably 10 to 43 mol %, particularly preferably 15 to 40 mol %, more preferably 20 to 36 mol %, based on the overall amount of the polycarboxylic acid compound. If the proportion of the aromatic polycarboxylic acid compound is excessively small, the cohesive force and hence the adhesive force tend to be reduced, failing to provide sufficient adhesive properties. If the proportion of the aromatic polycarboxylic acid compound is excessively great, the initial adhesive force (tackiness) tends to be reduced.

(Aromatic Polyol)

Usable as the aromatic polyol is a divalent aromatic diol.

Examples of the divalent aromatic diol include bisphenol-A, 4,4'-thiodiphenol, 4,4'-methylenediphenol, 4,4'-dihydroxybiphenyl, o-, m-, and p-dihydroxybenzenes, 2,5-naphthalenediol, and p-xylenediol, and ethylene oxide adducts and propylene oxide adducts thereof. These may be each used alone, or two or more of these may be used in combination.

Where the aromatic polyol is used as the copolymerization component for the polyester resin (A), the proportion of the aromatic polyol is preferably 1 to 50 mol %, more preferably 5 to 40 mol %, still more preferably 10 to 30 mol %, based on the overall amount of the polyol. If the proportion of the aromatic polyol is excessively small, the cohesive force and hence the adhesive force tend to be reduced. If the proportion of the aromatic polyol is excessively great, the initial adhesive force tends to be reduced.

The polyester resin (A) to be used in the present disclosure may be prepared by using an aliphatic compound (a3) in addition to the compound (a1) and the aromatic compound (a2) as the copolymerization component.

[Aliphatic Compound (a3)]

Usable as the aliphatic compound (a3) are an aliphatic polycarboxylic acid compound and an aliphatic polyol.

(Aliphatic Polycarboxylic Acid Compound)

Usable as the aliphatic polycarboxylic acid compound are a divalent aliphatic dicarboxylic acid compound and a trivalent or higher-valent polycarboxylic acid compound.

Examples of the aliphatic dicarboxylic acid compound include linear alkyl-containing dicarboxylic acid compounds such as malonic acid compound, dimethylmalonic acid compound, succinic acid compound, glutaric acid compound, adipic acid compound, trimethyladipic acid compound, pimelic acid compound, 2,2-dimethylglutaric acid compound, azelaic acid compound, sebacic acid compound, 1,9-nonanedicarboxylic acid compound, and decanedicarboxylic acid compound, and acyclic aliphatic dicarboxylic acid compounds such as fumaric acid compound, maleic acid compound, itaconic acid compound, thiodipropionic acid compound, and diglycolic acid compound; and alicyclic dicarboxylic acid compounds such as 1,3-cyclopentanedicarboxylic acid compound, 1,2-cyclohexanedicarboxylic acid compound, 1,3-cyclopentanedicarboxylic acid compound, 1,4-cyclohexanedicarboxylic acid compound, 2,5-norbornanedicarboxylic acid compound, and adamantanedicarboxylic acid compound.

An example of the trivalent or higher-valent polycarboxylic acid compound is adamantanetricarboxylic acid compound.

These aliphatic polycarboxylic acid compounds may be each used alone, or two or more of these aliphatic polycarboxylic acid compounds may be used in combination.

The aliphatic polycarboxylic acid compound preferably includes an acyclic aliphatic dicarboxylic acid compound having a carbon number of 4 or more (including carbon atoms of the carboxyl groups) for improvement of the initial adhesive force (tackiness). Particularly, the aliphatic polycarboxylic acid compound preferably includes an acyclic aliphatic dicarboxylic acid compound having a carbon number of 9 to 12 (including carbon atoms of the carboxyl groups) such as azelaic acid compound and sebacic acid compound.

The proportion of the acyclic aliphatic dicarboxylic acid compound having a carbon number of 4 or more is preferably not greater than 95 mol %, more preferably 5 to 90 mol %, particularly preferably 10 to 70 mol %, based on the overall amount of the polycarboxylic acid compound. If the proportion of the acyclic aliphatic dicarboxylic acid compound is excessively great, the adhesive force tends to be reduced, and the resin is liable to be crystalized, failing to provide sufficient adhesive properties.

Further, a plant-derived aliphatic polycarboxylic acid compound is preferably used as the aliphatic polycarboxylic acid compound in order to increase the biomass degree.

Examples of the plant-derived aliphatic polycarboxylic acid compound include sebacic acid compound derived from castor oil and succinic acid compound derived from corn.

(Aliphatic Polyol)

Usable as the aliphatic polyol are a divalent aliphatic diol and a trivalent or higher-valent aliphatic polyhydric alcohol.

Examples of the divalent aliphatic diol include: acyclic aliphatic diols such as ethylene glycol, diethylene glycol, triethylene glycol, propylene glycol, dipropylene glycol, 1,3-propanediol, 2,4-dimethyl-2-ethylhexane-1,3-diol, 2-methyl-1,3-propanediol, 2,2-dimethyl-1,3-propanediol (neopentyl glycol), 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 3-methyl-1,5-pentanediol, and 2,2,4-trimethyl-1,6-hexanediol; and alicyclic diols such as 1,2-cyclohexanedimethanol, 1,3-cyclohexanedimethanol, 1,4-cyclohexanedimethanol, spiroglycol, tricyclodecanedimethanol, adamantanediol, isosorbide, and 2,2,4,4-tetramethyl-1,3-cyclobutanediol.

Examples of the trivalent or higher-valent aliphatic polyhydric alcohol include pentaerythritol, dipentaerythritol, tripentaerythritol, glycerin, trimethylolpropane, trimethylolethane, 1,2,4-butanetriol, 1,2,5-pentanetriol, 1,3,6-hexanetriol, and adamantanetriol.

These aliphatic polyols may be each used alone, or two or more of these aliphatic polyols may be used in combination.

Of these, the polyol preferably includes an acyclic aliphatic diol having a linear structure in order to reduce the glass transition temperature (Tg) of the polyester resin (A) and improve the initial adhesive force. More preferably, the polyol is an acyclic aliphatic diol having a C2 to C18 linear structure, and is particularly preferably ethylene glycol, diethylene glycol, 1,3-propanediol, 1,4-butanediol, 1,5-pentanediol or 1,6-hexanediol. Of these, ethylene glycol is particularly preferred because it is possible to lower the glass transition temperature (Tg) of the polyester resin (A) and ensure more excellent adhesiveness.

The proportion of the acyclic aliphatic diol having the linear structure is preferably 1 to 100 mol %, more preferably 20 to 90 mol %, still more preferably 40 to 80 mol %, particularly preferably 60 to 75 mol %, based on the overall amount of the polyol. If the proportion of the acyclic aliphatic diol is excessively small, stable resin production tends to be difficult.

A plant-derived polyol is preferably used as the aliphatic polyol in order to increase the biomass degree.

Examples of the plant-derived polyol include isosorbide, fatty acid ester type diol derived from castor oil, and bio-ethylene glycol, bio-1,3-propane glycol, and bio-butylene glycol. Of these, bio-ethylene glycol and isosorbide are preferred.

Polyethylene terephthalate may be used as the acyclic aliphatic diol having the linear structure. As described above, the polyethylene terephthalate is a polyester resin prepared by polymerizing a terephthalic acid compound and ethylene glycol. With the use of the polyethylene terephthalate, therefore, the polyester resin (A) contains an ethylene glycol structure derived from the polyethylene terephthalate as the structural unit derived from the acyclic aliphatic diol having the linear structure. The polyethylene terephthalate may be virgin polyethylene terephthalate or recycled polyethylene terephthalate. From an environmentally friendly standpoint, it is preferred to use the recycled polyethylene terephthalate.

Further, the trivalent or higher-valent aliphatic polyhydric alcohol is preferably used as the aliphatic polyol in order to form reaction sites in the polyester resin (A) for reaction with a polyisocyanate compound (B) to be described later and to increase the cohesive force. Usable examples of the trivalent or higher-valent aliphatic polyhydric alcohol include trimethylolpropane, trimethylolethane, glycerin, pentaerythritol, 1,2,4-butanetriol, 1,2,5-pentanetriol, and 1,2,6-hexanetriol. Of these, trimethylolpropane is particularly preferred because gelation is less liable to occur.

The proportion of the trivalent or higher-valent aliphatic polyhydric alcohol is preferably not greater than 20 mol %, more preferably 0.1 to 10 mol %, particularly preferably 0.5 to 5 mol %, based on the overall amount of the polyol. If the proportion of the trivalent or higher-valent aliphatic polyhydric alcohol is excessively great, the production of the polyester resin (A) tends to be difficult.

As described above, it is preferred to use a plant-derived aliphatic polyol. Where the polycarboxylic acid compound has a higher biomass degree, a non-plant-derived aliphatic polyol may be used for easier polycondensation. Even in this case it is preferred to use an acyclic aliphatic diol having a linear structure having a carbon number of not greater than 4 in order to increase the biomass degree. It is particularly preferred to use an acyclic aliphatic diol having a C2 to C3 linear structure. Usable examples of the acyclic aliphatic diol having the linear structure having a carbon number of not greater than 4 include ethylene glycol, 1,3-propanediol, and 1,4-butanediol. Where an aliphatic polyol having a smaller carbon number (i.e., a carbon number of not greater than 4) is used, the weight ratio of the carboxylic acid compound having a higher biomass degree in the polyester resin (A) is increased, thereby increasing the biomass degree of the polyester resin (A) .

[Production of Polyester Resin (A)]

In the present disclosure, the polyester resin (A) can be produced through a polycondensation reaction of the polycarboxylic acid compound and the polyol in the presence of a catalyst by a known method. First, an esterification reaction or an ester exchange reaction is allowed to proceed, and followed by the polycondensation reaction. Where it is not necessary to increase the molecular weight of the polyester resin (A), the polyester resin (A) may be produced only by the esterification reaction or the ester exchange reaction. Where the aforementioned polyethylene terephthalate is used, the polyethylene terephthalate may be blended together with the polycarboxylic acid compound and the polyol.

For the esterification reaction or the ester exchange reaction, the catalyst is used. Specific examples of the catalyst include titanium-containing catalysts such as tetraisopropyl titanate and tetrabutyl titanate; antimony-containing catalysts such as antimony trioxide; germanium-containing catalysts such as germanium dioxide; and zinc acetate, manganese acetate, and dibutyl tin oxide. These may be each used alone, or two or more of these may be used in combination. Of these, antimony trioxide, tetrabutyl titanate, germanium dioxide, and zinc acetate are preferred for proper balance between the activity of the catalyst and the hue of the reaction product.

The proportion of the catalyst to be blended is preferably 1 to 10,000 ppm, particularly preferably 10 to 5,000 ppm, more preferably 20 to 3,000 ppm, based on the overall amount (overall weight) of the copolymerization component. If the proportion of the catalyst is excessively small, the polymerization reaction tends to proceed insufficiently. If the proportion of the catalyst is excessively great, side reactions are liable to occur without reduction in reaction period and other advantages.

The reaction temperature for the esterification reaction or the ester exchange reaction is preferably 200°C to 300°C, particularly preferably 210°C to 280°C, more preferably 220°C to 260°C. If the reaction temperature is excessively low, the reaction tends to proceed insufficiently. If the reaction temperature is excessively high, side reactions such as decomposition are liable to occur. The reaction pressure is typically an ordinary pressure.

After the esterification reaction or the ester exchange reaction, the polycondensation reaction is allowed to proceed at a reaction temperature of 200°C to 280°C, particularly preferably 210°C to 270°C, by using the same catalyst in substantially the same amount as used for the esterification reaction or the ester exchange reaction and by gradually reducing the pressure of the reaction system to a final pressure of not higher than 5 hPa. If the reaction temperature is excessively low, the reaction tends to proceed insufficiently. If the reaction temperature is excessively high, side reactions such as decomposition are liable to occur.

Thus, the polyester resin (A) is produced as having the structural unit derived from the compound (a1) and the structural unit derived from the aromatic compound (a2).

In the polyester resin (A), the structural unit derived from the at least one compound (a1) selected from the dimer acid compound as the polycarboxylic acid compound and the dimer diol as the polyol is preferably present in a proportion of 10 to 60 mol %, particularly preferably 15 to 55 mol %, more preferably 20 to 50 mol %, especially preferably 25 to 45 mol %, based on the overall amount of the polyester resin (A). If the proportion of the structural unit derived from the compound (a1) is excessively small, the polyester resin (A) tends to be excessively hard and hence the adhesive strength tends to be reduced. If the proportion of the structural unit derived from the compound (a1) is excessively great, the polyester resin (A) tends to be excessively soft and hence the adhesive properties tend to be slightly deteriorated.

In the present disclosure, the ratio (X1/X2) of the molar concentration (X1) of the structural unit derived from the at least one compound (a1) selected from the dimer acid and the dimer diol to the molar concentration (X2) of the structural unit derived from the aromatic compound (a2) in the polyester resin (A) is required to be greater than 1.0 for excellent adhesive force and holding force. The ratio (X1/X2) is preferably 1.1 or more, more preferably 1.4 or more, still more preferably 1.8 or more, particularly preferably 2.0 or more, especially preferably 2.2 or more. If the ratio (X1/X2) is 1.0 or less, the adhesive force and the holding force are liable to be reduced. The upper limit of the ratio (X1/X2) is typically 20 or less, preferably 10 or less, more preferably 6.0 or less, still more preferably 5.0 or less, particularly preferably 4.0 or less, especially preferably 3.5 or less. Even if the compound (a1) contains an aromatic ring, the compound (a1) is not regarded as the aromatic compound (a2).

The polyester resin (A) to be used in the present disclosure preferably has a number-average molecular weight of 3,000 or more, more preferably 3,500 to 50,000, still more preferably 4,000 to 40,000, particularly preferably 5,000 to 30,000, especially preferably 6,000 to 20,000, most preferably 7,000 to 15,000. If the number-average molecular weight of the polyester resin (A) is excessively great, its ability to be handled tends to be deteriorated, requiring a greater amount of a solvent to thereby increase the environmental load. If the number-average molecular weight of the polyester resin (A) is excessively small, the adhesive properties tend to be deteriorated.

The polyester resin (A) preferably has a weight-average molecular weight of 10,000 or more, more preferably 10,000 to 500,000, still more preferably 20,000 to 300,000, particularly preferably 30,000 to 250,000, especially preferably 40,000 to 200,000, most preferably 50,000 to 150,000. If the weight-average molecular weight of the polyester resin (A) is excessively great, the its ability to be handled tends to be deteriorated, requiring a greater amount of a solvent to thereby increase the environmental load.

The number-average molecular weight and the weight-average molecular weight are based on standard polystyrene molecular weight, and are determined through measurement by high-performance liquid chromatograph (HLC-8320GPC) available from Tosoh Corporation with the use of two columns TSKgel SuperMultipore HZ-M (each having an exclusion limit molecular weight of $2 \times 10^6$ and a theoretical plate number of 16,000 per column, and filled with a column packing material of styrene-divinylbenzene copolymer having a particle diameter of 4 $\mu$m) connected in series.

The polyester resin (A) typically has a biomass degree of 50% or more, preferably 60% or more, more preferably 70% or more, particularly preferably 75% or more. The upper limit of the biomass degree of the polyester resin (A) is 100%. If the biomass degree is lower, the reduction in environmental load tends to be insufficient.

Here, the biomass degree of the polyester resin (A) is the weight percentage of a portion of the polyester resin incorporated from the plant-derived material used for the production of the polyester resin (A) with respect to the overall weight of the polyester resin (A), and is calculated by the following calculation methods.

The biomass degrees of the polycarboxylic acid compound and the polyol are each determined from the weighted average of the respective biomass degrees.

A biomass degree calculated by any of the following calculation methods preferably falls within the aforementioned range.

(Calculation Methods)

<Where the polycondensation reaction is involved>

$$\text{Biomass degree (\%)} = (CM_1/CM_A) \times 100$$

wherein $CM_1$ is the carbon molar amount of the plant-derived monomer calculated based on the molar ratio between the polycarboxylic acid compound and the polyol in the polyester resin (A), and $CM_A$ is the total carbon molar amount of the constituent monomers of the polyester resin (A).

<Where the polycondensation reaction is not involved>

$$\text{Biomass degree (\%)} = (CM_2/CM_A) \times 100$$

wherein $CM_2$ is the carbon molar amount of the plant-derived monomer in the polyester resin (A), and $CM_A$ is the total carbon molar amount of the constituent monomers of the polyester resin (A).

Further, the biomass degree can also be determined by analyzing the formulation of the resin by NMR, and calculating (carbon number of plant-derived monomer)/(overall carbon number).

Further, the biomass degree may be measured by a method described in "A Specification of Bio-Fuel by Easy C-14 Measurement," Bulletin of Tokyo Metropolitan Industrial Technology Research Institute, No. 4 (2009).

For adjustment of the biomass degree within the predetermined range, the plant-derived polycarboxylic acid compound and/or the plant-derived polyol are mainly used. In particular, the plant-derived polycarboxylic acid compound is preferred in that the biomass degree can be efficiently increased.

In the present disclosure, the polyester resin (A) preferably has a regenerated carbon use percentage of 50% or more for the reduction in environmental load. More preferably, the regenerated carbon use percentage of the polyester resin (A) is 60% or more, still more preferably 70% or more, particularly preferably 75% or more. The upper limit of the regenerated carbon use percentage is 100%.

Here, the regenerated carbon use percentage of the polyester resin (A) is the weight percentage of a regenerated carbon-containing material used for the production of the polyester resin (A) with respect to the overall weight of the polyester resin (A). Examples of the regenerated carbon-containing material include plant-derived material and recycled polyethylene terephthalate (recycled PET).

Calculation methods for the regenerated carbon use percentage is substantially the same as the calculation methods for the biomass degree. That is, the regenerated carbon use percentage is calculated in the following manner.

(Calculation Methods)

<Where the polycondensation reaction is involved>

$$\text{Regenerated carbon use percentage (\%)} = (RCM_1/CM_A) \times 100$$

wherein $RCM_1$ is a regenerated carbon molar amount calculated based on the molar ratio between the polycarboxylic acid compound and the polyol in the polyester resin (A), and $CM_A$ is the total carbon molar amount of the constituent monomers of the polyester resin (A).

<Where the polycondensation reaction is not involved>

$$\text{Regenerated carbon use percentage (\%)} = (RCM_2/CM_A) \times 100$$

wherein $RCM_2$ is the regenerated carbon molar amount of the polyester resin (A), and $CM_A$ is the total carbon molar amount of the constituent monomers of the polyester resin (A).

The polyester resin (A) preferably has a glass transition temperature (Tg) of -90°C to 20°C, particularly preferably -60°C to 0°C, more preferably -50°C to -20°C. If the glass transition temperature (Tg) of the polyester resin (A) is excessively high, the adherence of the resulting adhesive composition tends to be reduced. If the glass transition temperature (Tg) of the polyester resin (A) is excessively low, the heat resistance and/or the cohesive force tend to be reduced.

The glass transition temperature (Tg) is measured with the use of a differential scanning calorimeter DSC Q20 available from TA Instruments Inc. The measurement temperature range is -90°C to 100°C, and the temperature increase rate is 10°C/minute.

The polyester resin (A) typically has an ester group concentration of 2 mmol/g or more, preferably 3 to 10 mmol/g, more preferably 3.6 to 6 mmol/g, particularly preferably 4.2 to 5 mmol/g. If the ester group concentration of the polyester resin (A) is excessively low, the polyester resin (A) tends to be excessively soft and hence its adhesive properties are deteriorated.

The ester group concentration (mmol/g) is the molar amount of ester bonds present in 1 g of the polyester resin, and is determined, for example, by calculation based on the amounts of fed ingredients. In the calculation, a smaller one of the fed molar amount of the polycarboxylic acid compound and the fed molar amount of the polyol is divided by the overall weight of the polyester resin. Exemplary calculation formulae are shown below.

Where the fed molar amount of the polycarboxylic acid compound and the fed molar amount of the polyol are equal to each other, either of the following calculation formulae may be used.

Where the polyester resin is prepared by using a monomer having both the carboxylic acid group and the hydroxyl group or prepared from caprolactone or the like, the calculation method may be properly modified.

<Where the amount of the polycarboxylic acid compound is smaller>

$$\text{Ester group concentration (mmol/g)} = \left[ \frac{(A1/a1 \times m1 + A2/a2 \times m2 + A3/a3 \times m3 \cdots)}{Z} \right]$$

$$\times 1000$$

A1, A2, A3,...: The fed amount (g) of the polycarboxylic acid compound
a1, a2, a3,...: The molecular weight of the polycarboxylic acid compound
m1, m2, m3,...: The number of carboxyl groups per molecule of the polycarboxylic acid compound
Z: The weight (g) of the resulting polyester resin

<Where the amount of the polyol is smaller>

$$\text{Ester group concentration (mmol/g)} = \left[ \frac{(B1/b1 \times n1 + B2/b2 \times n2 + B3/b3 \times n3 \cdots)}{Z} \right]$$

$$\times 1000$$

B1, B2, B3,...:     The fed amount (g) of the polyol

b1, b2, b3,...:     The molecular weight of the polyol

n1, n2, n3,...:     The number of hydroxyl groups per molecule of the polyol

Z:                          The weight (g) of the resulting polyester resin

The ester group concentration may also be measured by a known method using NMR or the like.
The ester group concentration of the polyester resin (A) can be determined, for example, by $^1$H-NMR measurement (proton type nuclear magnetic resonance spectrometry) at a resonance frequency of 400 MHz or $^{13}$C-NMR measurement (carbon type nuclear magnetic resonance spectrometry).
The ester group concentration may be adjusted, for example, by a method in which a polyol having a carbon number of not greater than 4 is selected as the polyol or a method in which the proportion of the linear carboxylic acid compound as the polycarboxylic acid compound is increased, or by using these methods in combination.
The polyester resin (A) typically has a crystal fusion heat amount of not greater than 10 J/g, preferably not greater than 5 J/g, more preferably not greater than 2 J/g, as measured by means of a differential scanning calorimeter, and particularly preferably generates no crystal fusion heat. If the crystal fusion heat amount is excessively great, crystallinity tends to occur. This tends to result in poorer storage stability of a resin solution, in poorer low-temperature stability of an adhesive sheet, and in poorer adhesive properties.
The crystal fusion heat amount is the amount of energy consumed when a crystallized substance is thermally fused, and is typically measured by means of the differential scanning calorimeter (DSC).
The crystal fusion heat amount can be adjusted, for example, by using a polycarboxylic acid compound having an alkyl group in its side chain and/or a polyol having an alkyl group in its side chain or by using three or more types of comonomers, preferably four or more types of comonomers.
The polyester resin (A) preferably has an acid value of not greater than 10 mg KOH/g for prevention of the hydrolysis and for improvement of the durability. The acid value of the polyester resin (A) is more preferably not greater than 5 mg KOH/g, particularly preferably not greater than 2 mg KOH/g. If the acid value of the polyester resin (A) is excessively great, the durability tends to be deteriorated.

The acid value may be adjusted, for example, by increasing the proportion of the polyol or properly adjusting the reaction conditions in the esterification reaction or the ester exchange reaction. The lower limit of the acid value is typically 0 mg KOH/g.

The acid value of the polyester resin (A) is determined by neutralization titration in conformity with JIS K0070.

In the present disclosure, the term "acid value" means the amount of the carboxyl group contained in the polyester resin (A). The carboxyl group includes a carboxylate ion which results from the neutralization of the carboxyl group with a basic compound.

The adhesive composition according to the present disclosure preferably contains a polyisocyanate compound (B), a hydrolysis inhibitor (C), and a tackifier (D) together with the polyester resin (A) and, as required, a urethanization catalyst (E) and an antioxidant (F).

<Polyisocyanate Compound (B)>

The adhesive composition according to the present disclosure preferably further contains the polyisocyanate compound (B) as a crosslinking agent. Where the polyisocyanate compound (B) is contained, the polyester resin (A) is crosslinked with the polyisocyanate compound (B) to be imparted with an excellent cohesive force, thereby improving the adhesive properties.

Examples of the polyisocyanate compound (B) include aromatic isocyanate crosslinking agents including tolylene diisocyanate crosslinking agents such as 2,4-tolylene diisocyanate and 2,6-tolylene diisocyanate, xylylene diisocyanate crosslinking agents such as 1,3-xylylene diisocyanate, diphenylmethane crosslinking agents such as diphenylmethane-4,4-diisocyanate, naphthalene diisocyanate crosslinking agents such as 1,5-naphthalene diisocyanate; alicyclic isocyanate crosslinking agents such as isophorone diisocyanate, 1,4-cyclohexane diisocyanate, 4,4'-dicyclohexylmethane diisocyanate, methylcyclohexane diisocyanate, isopropylidene dicyclohexyl-4,4'-diisocyanate, 1,3-diisocyanatomethylcyclohexane, and norbornane diisocyanate; aliphatic isocyanate crosslinking agents such as hexamethylene diisocyanate and trimethylhexamethylene diisocyanate; and adduct compounds, biuret compounds, and isocyanurate compounds of any of these polyisocyanate compounds. The polyisocyanate compounds described above may each have an isocyanate portion blocked with phenol, lactam or the like. These polyisocyanate compounds may be each used alone, or two or more of these polyisocyanate compounds may be used in combination.

The proportion of the polyisocyanate compound (B) may be properly selected according to the molecular weight of the polyester resin (A) and the use purpose, but preferably such that a reactive group is present in the polyisocyanate compound (B) in 0.2 to 10 equivalents, particularly preferably 0.5 to 5 equivalents, more preferably 0.5 to 3 equivalents, per equivalent of at least one selected from the hydroxyl group and the carboxyl group contained in the polyester resin (A). If the equivalent amount of the reactive group present in the polyisocyanate compound (B) is excessively small, the cohesive force tends to be reduced. If the equivalent amount of the reactive group present in the polyisocyanate compound (B) is excessively great, the flexibility tends to be reduced.

For a reaction between the polyester resin (A) and the polyisocyanate compound (B), an organic solvent having no functional group reactive with the polyester resin (A) and the polyisocyanate compound (B) may be used. Examples of the organic solvent include esters such as ethyl acetate and butyl acetate, ketones such as methyl ethyl ketone and methyl isobutyl ketone, and aromatic solvents such as toluene and xylene. These may be each used alone, or two or more of these may be used in combination.

<Hydrolysis Inhibitor (C)>

The hydrolysis inhibitor (C) is contained in the adhesive composition in order to impart the adhesive composition with long-term durability.

A conventionally known hydrolysis inhibitor may be used as the hydrolysis inhibitor (C). For example, a compound which reacts to be bonded to a terminal carboxyl group of the polyester resin (A) is usable, and specific examples thereof include compounds containing a functional group such as carbodiimide group, epoxy group or oxazoline group. Of these, the carbodiimide-containing compound is preferred because of its higher effect for eliminating the catalytic activity of the proton of the terminal carboxyl group.

Typically, a known carbodiimide having one or more carbodiimide groups (-N=C=N-) in its molecule may be used as the carbodiimide-containing compound. In order to improve the durability in a high-temperature and high-humidity environment, a compound containing two or more carbodiimide groups in its molecule (i.e., a polycarbodiimide compound) is preferred, and a compound containing three or more carbodiimide groups in its molecule is particularly preferred. Further, a compound containing five or more carbodiimide groups in its molecule is preferred, and a compound containing seven or more carbodiimide groups in its molecule is especially preferred. The number of carbodiimide groups contained in the molecule of the carbodiimide-containing compound is typically not greater than 50. If the number of the carbodiimide groups is excessively great, the carbodiimide-containing compound tends to be poorer in compatibility because of its excessively large molecular structure. A high-molecular weight polycarbodiimide prepared by a decarbonation condensation reaction of a diisocyanate in the presence of a carbodiimidization catalyst is also preferred as the carbodiimide-containing compound.

Further, terminal isocyanate groups of the high-molecular weight polycarbodiimide are preferably terminated with a terminal blocking agent from the viewpoint of storage stability. A compound having active hydrogen reactivity with an isocyanate group or a compound having an isocyanate group is usable as the terminal blocking agent. Examples of the terminal blocking agent include monoalcohols, monocarboxylic acids, monoamines, and monoisocyanates each containing one substituent selected from the group consisting of the carboxyl group, the amino group, and the isocyanate group.

The high-molecular weight polycarbodiimide may be prepared through the decarbonation condensation reaction of any of the following exemplary diisocyanates.

The exemplary diisocyanates include 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylylene diisocyanate. These may be each used alone, or two or more of these may be used in combination. The high-molecular-weight polycarbodiimide may be synthesized from any of these diisocyanates, or a commercially available product may be used as the high-molecular-weight polycarbodiimide.

Examples of the commercially available product of the carbodiimide-containing compound include CARBODILITE (registered trade name) series available from Nisshinbo Chemical Inc. Of these, CARBODILITE (registered trade name) V-01, V-02B, V-03, V-04K, V-04PF, V-05, V-07, V-09, and V-09GB are preferred because of their excellent compatibility with organic solvents.

A glycidyl ester compound and a glycidyl ether compound, for example, are preferred as the epoxy-containing compound.

Examples of the glycidyl ester compound include glycidyl benzoate, glycidyl t-butylbenzoate, glycidyl p-toluate, glycidyl cyclohexanecarboxylate, glycidyl pelargonate, glycidyl stearate, glycidyl laurate, glycidyl palmitate, glycidyl behenate, glycidyl versatate, glycidyl oleate, glycidyl linoleate, glycidyl linolenate, glycidyl behenolate, glycidyl stearolate, diglycidyl terephthalate, diglycidyl isophthalate, diglycidyl phthalate, diglycidyl naphthalenedicarboxylate, diglycidyl methylterephthalate, diglycidyl hexahydrophthalate, diglycidyl tetrahydrophthalate, diglycidyl cyclohexanedicarboxylate, diglycidyl adipate, diglycidyl succinate, diglycidyl sebacate, diglycidyl dodecanedioate, diglycidyl octadecanedicarboxylate, triglycidyl trimellitate, and tetraglycidyl pyromellitate. These may be each used alone, or two or more of these may be used in combination.

Examples of the glycidyl ether compound include phenyl glycidyl ether, o-phenyl glycidyl ether, 1,4-bis($\beta,\gamma$-epoxypropoxy)butane, 1,6-bis($\beta,\gamma$-epoxypropoxy)hexane, 1,4-bis($\beta,\gamma$-epoxypropoxy)benzene, 1-($\beta,\gamma$-epoxypropoxy)-2-ethoxyethane, 1-($\beta,\gamma$-epoxypropoxy)-2-benzyloxyethane, 2,2-bis[p-($\beta,\gamma$-epoxypropoxy)phenyl]propane, and bisglycidyl polyether prepared by a reaction between epichlorohydrin and bisphenol such as 2,2-bis(4-hydroxyphenyl)propane or 2,2-bis(4-hydroxyphenyl)methane. These may be each used alone, or two or more of these may be used in combination.

A bisoxazoline compound or the like is preferred as the oxazoline-containing compound. Specific examples of the bisoxazoline compound include 2,2'-bis(2-oxazoline), 2,2'-bis(4-methyl-2-oxazoline), 2,2'-bis(4,4-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4-dimethyl-2-oxazoline), 2,2'-m-phenylenebis(4-methyl-2-oxazoline), 2,2'-m-phenylenebis(4,4-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4-dimethyl-2-oxazoline), 2,2'-9,9'-diphenoxyethanebis(2-oxazoline), 2,2'-cyclohexylenebis(2-oxazoline), and 2,2'-diphenylenebis(2-oxazoline). Of these, 2,2'-bis(2-oxazoline) is most preferred from the viewpoint of the reactivity with the polyester resin (A). These may be each used alone, or two or more of these may be used in combination.

The hydrolysis inhibitor (C) preferably has a lower volatility and, therefore, preferably has a higher number-average molecular weight. The number-average molecular weight of the hydrolysis inhibitor (C) is typically 300 to 10,000, preferably 1,000 to 5,000.

From the viewpoint of the hydrolysis resistance, the hydrolysis inhibitor (C) preferably has a higher weight-average molecular weight. The weight-average molecular weight of the hydrolysis inhibitor (C) is preferably 500 or more, more preferably 1,000 or more, still more preferably 2,000 or more, particularly preferably 3,000 or more. The upper limit of the weight-average molecular weight is typically 50,000.

If the molecular weight of the hydrolysis inhibitor (C) is excessively small, the hydrolysis resistance tends to be reduced. If the molecular weight of the hydrolysis inhibitor (C) is excessively great, the compatibility with the polyester resin (A) tends to be reduced.

Of the hydrolysis inhibitors described above, the carbodiimide-containing compound is preferably used as the hydrolysis inhibitor (C). In this case, the carbodiimide equivalent is preferably 50 to 10,000, particularly preferably 100 to 1,000, more preferably 150 to 500. The term "carbodiimide equivalent" means a chemical formula weight per one carbodiimide group.

The proportion of the hydrolysis inhibitor (C) is preferably 0.01 to 10 parts by weight, particularly preferably 0.1 to 5 parts by weight, more preferably 0.2 to 3 parts by weight, based on 100 parts by weight of the polyester resin (A). If the proportion of the hydrolysis inhibitor (C) is excessively great, the compatibility with the polyester resin (A) tends to be poorer, resulting in turbidity. If the proportion of the hydrolysis inhibitor (C) is excessively small, it tends to be difficult to ensure sufficient durability.

The proportion of the hydrolysis inhibitor (C) is preferably optimized according to the acid value of the polyester resin (A). The molar ratio $(y)/(x)$ of the total molar amount $(y)$ of the functional groups of the hydrolysis inhibitor (C) in the adhesive composition to the total molar amount $(x)$ of the acidic functional groups of the polyester resin (A) in the adhesive composition is preferably $0.5 \leq (y)/(x)$, particularly preferably $1 \leq (y)/(x) \leq 1,000$, more preferably $1.5 \leq (y)/(x) \leq 100$.

If the molar ratio $(y)/(x)$ is excessively small, the moist-heat resistance tends to be deteriorated. If the molar ratio $(y)/(x)$ is excessively great, the compatibility with the polyester resin (A), the adhesive force, the cohesive force, and the durability tend to be deteriorated.

<Tackifier (D)>

In the present disclosure, the adhesive composition preferably further contains the tackifier (D) for improvement of the adhesive properties.

The tackifier (D) is not particularly limited, but a conventionally known tackifier is usable as the tackifier (D). Examples of the tackifier (D) include hydrocarbon tackifier resin, terpene resin, phenol resin, rosin resin, xylene resin, epoxy resin, polyamide resin, ketone resin, and elastomer resin. These may be each used alone, or two or more of these may be used in combination. Of these, the hydrocarbon tackifier resin and the terpene resin are preferred. The tackifier (D) particularly preferably includes at least one hydrocarbon tackifier resin. The proportion of the hydrocarbon tackifier resin is preferably 30 wt.% or more, more preferably 50 wt.% or more, still more preferably 70 wt.% or more, based on the overall amount of the tackifier.

Examples of the hydrocarbon tackifier resin include various hydrocarbon resins such as aliphatic hydrocarbon resin, aromatic hydrocarbon resin, alicyclic hydrocarbon resin, aliphatic/aromatic petroleum resin (styrene-olefin copolymer or the like), aliphatic/alicyclic petroleum resin, hydrogenated hydrocarbon resin, coumarone resin, and coumarone indene resin. Exemplary commercially available products of the hydrocarbon tackifier resin include FTR6100, FTR6110, FTR6125, FTR8100, FTR8120, and FMR0150 available from Mitsui Chemicals, Inc.

Examples of the terpene resin include polyterpene resin, terpene phenol resin, and aromatic modified polyterpene resin. Specific examples of the terpene resin include $\alpha$-pinene polymer, $\beta$-pinene polymer, dipentene polymer, and modified terpene resins prepared by phenol modification, aromatic modification, hydrogenation modification, and hydrocarbon modification of any of these polymers. Exemplary commercially available products of the terpene resin include YS POLYSTAR S145, YS RESIN PX1000, YS RESIN PX1250, YS POLYSTAR T160, YS POLYSTAR T145, YS POLYSTAR T130, YS RESIN TO115, YS POLYSTAR G150, YS POLYSTAR G125, YS POLYSTAR U130, and CLEARON P125 available from Yasuhara Chemical Co., Ltd. From the viewpoint of the adherence to nonpolar adherends such as polypropylene, the terpene resin is preferred, and the terpene phenol resin is particularly preferred.

Examples of the phenol resin include condensation products of phenol compounds such as phenol, m-cresol, 3,5-xylenol, p-alkylphenol, and resorcinol with formaldehyde. Other examples of the phenol resin include resol prepared by addition reaction of any of the phenol compounds with formaldehyde in the presence of an alkali catalyst, novolak prepared by condensation reaction of any of the phenol compounds with formaldehyde in the presence of an acid catalyst, and rosin-modified phenol resin prepared by adding phenol to a rosin compound such as unmodified rosin, modified rosin, or a derivative of any of these rosins in the presence of an acid catalyst, and performing thermal polymerization.

Examples of the rosin resin include rosin, polymerized rosin resin, hydrogenated rosin resin, rosin ester resin, hydrogenated rosin ester resin, rosin phenol resin, and polymerized rosin ester. Specific examples of the rosin resin include unmodified rosins (raw rosins) such as gum rosin, wood rosin, and tall oil rosin; chemically modified rosins prepared by hydrogenation, disproportionation, and polymerization of any of these unmodified rosins; and derivatives of any of these rosins. Exemplary commercially available products of the rosin resin include HARIESTER TF, HARITACK 8LJA, HARITACK PH, HARITACK FK100, and HARITACK PCJ available from Harima Chemicals Group, Inc.

The tackifier (D) preferably has an acid value of not greater than 30 mg KOH/g, particularly preferably not greater than 10 mg KOH/g, more preferably not greater than 6 mg KOH/g, especially preferably not greater than 3 mg KOH/g. Where plural types of tackifiers are used in combination as the tackifier (D), the average acid value of the tackifiers preferably falls within the aforementioned range.

The tackifier (D) preferably has a softening point of 80°C to 170°C, particularly preferably 90°C to 165°C, more preferably 100°C to 160°C, still more preferably 120°C to 155°C, especially preferably 135°C to 150°C (as measured, for example, by a ring and ball method). Where the softening point of the tackifier (D) falls within the aforementioned range, the adhesive properties (adhesive force and cohesive force) tend to be improved.

In the present disclosure, the tackifier (D) is preferably a plant-derived tackifier so that the adhesive agent can have a higher biomass degree as a whole. Examples of the plant-derived tackifier include the terpene resin and the rosin resin.

The tackifier (D) preferably contains an aromatic structural unit for improvement of the cohesive force and the compatibility. Examples of the tackifier containing the aromatic structural unit include aromatic hydrocarbon resin, aliphatic/aromatic petroleum resin (styrene-olefin copolymer and the like), coumarone resin, coumarone indene resin, terpene phenol resin, and aromatic modified terpene resin.

The proportion of the tackifier (D) is preferably 2 to 200 parts by weight, more preferably 5 to 150 parts by weight, still more preferably 8 to 100 parts by weight, particularly preferably 10 to 80 parts by weight, especially preferably 20 to 50 parts by weight, based on 100 parts by weight of the polyester resin (A). Where the proportion of the tackifier (D) falls within the aforementioned range, the adhesive properties (adhesive force and cohesive force) tend to be improved.

<Urethanization Catalyst (E)>

More preferably, the adhesive composition according to the present disclosure further contains the urethanization catalyst (E) from the viewpoint of the reaction rate.

Examples of the urethanization catalyst (E) include organic metal compound and tertiary amine compound, which may be used alone or in combination.

Examples of the organic metal compound include zirconium compound, iron compound, tin compound, titanium compound, lead compound, cobalt compound, and zinc compound.

Examples of the zirconium compound include zirconium naphthenate and zirconium acetylacetonate.

Examples of the iron compound include iron acetylacetonate and iron 2-ethylhexanoate.

Examples of the tin compound include dibutyltin dichloride, dibutyltin oxide, and dibutyltin dilaurate.

Examples of the titanium compound include dibutyltitanium dichloride, tetrabutyl titanate, and butoxytitanium trichloride.

Examples of the lead compound include lead oleate, lead 2-ethylhexanoate, lead benzoate, and lead naphthenate.

Examples of the cobalt compound include cobalt 2-ethylhexanoate and cobalt benzoate.

Examples of the zinc compound include zinc naphthenate and zinc 2-ethylhexanoate.

Examples of the tertiary amine compound include triethylamine, triethylenediamine, and 1,8-diazabicyclo-(5,4,0)-undecene-7.

Of these urethanization catalysts, the organic metal compounds are preferred as the urethanization catalyst (E) from the viewpoint of the reaction rate and the pot life of the adhesive agent layer. Particularly, the zirconium compounds are preferred. Further, the urethanization catalyst (E) is preferably used in combination with acetylacetone as a catalyzation inhibitor. The use of acetylacetone advantageously suppresses the catalyzation at a lower temperature to thereby increase the pot life.

The proportion of the urethanization catalyst (E) is preferably 0.0001 to 1 part by weight, particularly preferably 0.001 to 0.1 part by weight, more preferably 0.01 to 0.05 parts by weight, based on 100 parts by weight of the polyester resin (A). If the proportion of the urethanization catalyst (E) is excessively small, an aging period required for completion of the crosslinking reaction tends to be prolonged. If the proportion of the urethanization catalyst (E) is excessively great, the adhesive properties tend to be deteriorated.

<Antioxidant (F)>

More preferably, the adhesive composition according to the present disclosure further contains the antioxidant (F) for improvement of the stability of the resin.

Examples of the antioxidant (F) include hindered phenol antioxidant, amine antioxidant, sulfur antioxidant, and phosphoric acid antioxidant. Particularly, at least one selected from the group consisting of the hindered phenol antioxidant, the amine antioxidant, and the phosphoric acid antioxidant is preferred as the antioxidant (F), and a hindered phenol compound antioxidant is particularly preferred as the antioxidant (F).

An example of the hindered phenol antioxidant is an antioxidant having a hindered phenol structure such that a sterically hindering group (e.g., t-butyl group) is bonded to at least one of carbon atoms next to a carbon atom of an aromatic ring to which a phenolic hydroxyl group is bonded.

The proportion of the antioxidant (F) is preferably 0.01 to 10 parts by weight, more preferably 0.03 to 8 parts by weight, still more preferably 0.05 to 5 parts by weight, based on 100 parts by weight of the polyester resin (A).

If the proportion of the antioxidant (F) is excessively small, an adhesive residue is liable to adhere to an adherend. If the proportion of the antioxidant (F) is excessively great, the adhesive properties tend to be deteriorated.

The adhesive composition according to the present disclosure contains the polyester resin (A), the polyisocyanate compound (B), the hydrolysis inhibitor (C), the tackifier (D), the urethanization catalyst (E), and the antioxidant (F), and may further contain additives such as softener, UV absorber, stabilizer, and antistatic agent, as long as the effects of the present disclosure are not impaired. Other examples of the additives include powdery and particulate additives such as inorganic and organic fillers, metal powder, and pigment. The adhesive composition may contain small amounts of impurities attributable to production ingredients for the components of the adhesive agent.

These may be each used alone, or two or more of these may be used in combination.

The adhesive composition can be prepared, for example, by preparing the polyester resin (A) and other optional components, and blending and dispersing the optional components in the polyester resin (A) in the preparation of the polyester resin (A), or blending the optional components in a solution prepared by dissolving the polyester resin (A) in an organic solvent and dispersing the optional components in the solution by means of a mixing roller.

The adhesive composition according to the present disclosure preferably has a biomass degree of 50% or more for the reduction of the environmental load. More preferably, the biomass degree of the adhesive composition is 60% or more, still more preferably 70% or more, particularly preferably 80% or more, especially preferably 85% or more, most preferably 90% or more. The biomass degree of the adhesive composition can be adjusted by adjusting the types and the proportions of the polyester resin (A) and the other components.

The biomass degree of the adhesive composition is the weight percentage of the plant-derived materials used for the production of the adhesive composition with respect to the overall weight of the adhesive composition, and can be determined, for example, from the following expression:

$$Biomass\ degree\ (\%) = \frac{\sum(BD_i \times W_i)}{W} \times 100$$

wherein BDi is the biomass degree of each of the plant-derived materials used for the production of the adhesive composition, Wi is the weight of each of the plant-derived materials used for the production of the adhesive composition, and W is the overall weight of the adhesive composition.

The biomass degree of the adhesive composition can also be determined by the aforementioned method utilizing the NMR or the aforementioned method utilizing the natural radioactive carbon C-14. The biomass degree determined by any of these methods preferably falls within the aforementioned range.

The adhesive composition according to the present disclosure preferably has a regenerated carbon use percentage of 50% or more for the reduction of the environmental load. More preferably, the regenerated carbon use percentage of the adhesive composition is 60% or more, more preferably 70% or more, particularly preferably 75% or more. The upper limit of the regenerated carbon use percentage is 100%.

The regenerated carbon use percentage of the adhesive composition is the weight percentage of regenerated carbon-containing materials used for the production of the adhesive composition with respect to the overall weight of the adhesive composition. Examples of the regenerated carbon-containing materials include plant-derived materials and regenerated polyethylene terephthalate (recycled PET). The regenerated carbon use percentage of the adhesive composition can be adjusted by adjusting the types and the proportions of the polyester resin (A) and the other components.

The regenerated carbon use percentage of the adhesive composition can be determined, for example, from the following expression:

$$Regenerated\ carbon\ use\ percentage\ (\%) = \frac{\sum(RCP_i \times RCW_i)}{W} \times 100$$

wherein RCPi is the regenerated carbon use percentage of each of the regenerated carbon-containing materials used for the production of the adhesive composition, RCW$_i$ is the weight of each of the regenerated carbon-containing materials used for the production of the adhesive composition, and W is the overall weight of the adhesive composition.

An adhesive agent according to the present disclosure is produced by crosslinking the adhesive composition described above.

An adhesive sheet according to the present disclosure includes an adhesive agent layer containing the adhesive agent. The adhesive agent layer is preferably provided on one or each of opposite surfaces of a support substrate.

In the present disclosure, the term "sheet" is intended to include film and tape.

<Adhesive Sheet>

The adhesive sheet can be produced, for example, in the following manner.

A known adhesive sheet production method may be employed for the production of the adhesive sheet. The production of the adhesive sheet is achieved, for example, by applying the adhesive composition onto a substrate, drying the resulting adhesive composition layer, applying a release sheet on an opposite surface of the adhesive composition layer, and aging the adhesive composition layer as required. Thus, the adhesive sheet of the present disclosure is produced, which has the adhesive agent layer containing the adhesive agent on the substrate.

Alternatively, the production of the adhesive sheet of the present disclosure may be achieved by applying the adhesive composition onto a release sheet, drying the resulting adhesive composition layer, applying a substrate on an opposite surface of the adhesive composition layer, and aging the adhesive composition layer as required.

Further, a substrateless double-sided adhesive sheet can be produced by forming an adhesive agent layer on a release sheet, and applying another release sheet on an opposite surface of the adhesive agent layer.

When the adhesive sheet or the substrateless double-sided adhesive sheet thus produced is used, the release sheet is removed from the adhesive agent layer, which is bonded to an adherend.

Examples of the substrate include: sheets made of at least one synthetic resin selected from the group consisting of polyester resins such as polyethylene naphthalate, polyethylene terephthalate, polybutylene terephthalate, and polyethylene terephthalate/isophthalate copolymers, polyolefin resins such as polyethylene, polypropylene, and polymethylpentene, polyfluoroethylene resins such as polyvinyl fluoride, polyvinylidene fluoride, and polyfluoroethylene, polyamides such as nylon 6 and nylon 6,6, vinyl polymers such as polyvinyl chloride, polyvinyl chloride/vinyl acetate copolymers, ethylene-vinyl acetate copolymers, ethylene-vinyl alcohol copolymers, polyvinyl alcohol, and vinylon, cellulose resins such as cellulose triacetate and cellophane, acrylic resins such as polymethyl methacrylate, polyethyl methacrylate, polyethyl acrylate, and polybutyl acrylate, polystyrene, polycarbonate, polyarylate, polyimide, and cycloolefin polymer; metal foils such as of aluminum, copper, and iron; paper sheets such as high-quality paper and glassine paper; and woven and nonwoven fabrics of glass fibers, natural fibers, and synthetic fibers. The substrate may be in the form of a single-layer substrate including any one of these substrates, or may be in the form of a laminate including two or more of these substrates laminated together.

Of these, the polyethylene terephthalate substrate and the polyimide substrate are preferred, and the polyethylene terephthalate substrate is particularly preferred because of its excellent adhesion with the adhesive agent.

Foam substrates, e.g., foam sheets of synthetic resin foams such as polyurethane foam, polyethylene foam, and polyacrylate foam, are also usable as the substrate. Of these, the polyethylene foam and the polyacrylate foam are preferred because the conformability to an adherend and the adhesive strength can be properly balanced.

The substrate preferably has a thickness of, for example, 1 to 1,000 $\mu$m, particularly preferably 2 to 500 $\mu$m, more preferably 3 to 300 $\mu$m.

Usable examples of the release sheet include release sheets prepared by release-treating the sheets made of the synthetic resins, the paper sheets, and the woven and nonwoven fabrics described above as the substrate. A silicone release sheet is preferably used as the release sheet.

Exemplary coaters to be used for the application of the adhesive composition include gravure roll coater, reverse roll coater, kiss roll coater, dip roll coater, bar coater, knife coater, spray coater, and comma coater.

For the aging treatment, the aging temperature is typically a room temperature (23°C) to 70°C, and the aging period is typically 1 to 30 days. Specifically, the aging treatment is performed, for example, at 23°C for 1 to 20 days, preferably at 23°C for 3 to 14 days or at 40°C for 1 to 10 days.

For the drying, the drying temperature is preferably 60°C to 140°C, particularly preferably 80°C to 120°C, and the drying period is preferably 0.5 to 30 minutes, particularly preferably 1 to 5 minutes.

The adhesive agent layer of the adhesive sheet or the substrateless double-sided adhesive sheet preferably has a thickness of 2 to 500 $\mu$m, particularly preferably 5 to 200 $\mu$m, more preferably 10 to 100 $\mu$m. If the thickness of the adhesive agent layer is excessively small, the adhesive force tends to be reduced. If the thickness of the adhesive agent layer is excessively great, it will be difficult to uniformly apply the adhesive composition, and the resulting adhesive composition film tends to suffer from bubbling and other inconveniences. In consideration of the impact-absorbing property, the thickness is preferably 50 $\mu$m or more.

The thickness of the adhesive agent layer is determined by measuring the thickness of the entire adhesive sheet and the thicknesses of constituent layers of the adhesive sheet other than the adhesive agent layer by means of ID-C112B available from Mitutoyo Corporation, and subtracting the other constituent layer thicknesses from the entire adhesive sheet thickness thus measured.

The adhesive agent layer of the adhesive sheet preferably has a gel fraction of 10 wt.% or more, particularly preferably 20 to 80 wt.%, more preferably 30 to 70 wt.%, from the viewpoint of the durability and the adhesive force. If the gel fraction is excessively low, the holding force tends to be reduced due to reduction in cohesive force. If the gel fraction is excessively high, the adhesive force tends to be reduced due to increase in cohesive force.

The gel fraction is an index of the crosslinking degree, and is calculated, for example, by the following method. An adhesive sheet (provided with no release sheet) which includes a polymer sheet (e.g., a PET film or the like) as a substrate and an adhesive agent layer formed on the polymer sheet is wrapped with a 200-mesh SUS (stainless steel) wire net, and immersed in toluene at 23°C for 24 hours. The weight percentage of an insoluble component of the adhesive agent remaining in the wire net after the immersion with respect to the weight of the adhesive agent before the immersion is defined as the gel fraction. The weight of the substrate is preliminarily subtracted from the weight of the adhesive sheet.

As required, the adhesive sheet may be protected with a release sheet provided on an outer side of the adhesive agent layer. In the adhesive sheet with its adhesive agent layer provided on one side of the substrate, a surface of the substrate opposite from the adhesive agent layer may be release-treated, making it possible to protect the adhesive agent layer with the release-treated surface.

The adhesive agent of the present disclosure can be used for bonding various components. Particularly, the adhesive agent of the present disclosure can be used for a single-sided or double-sided adhesive sheet for bonding optical components, or for a single-sided or double-sided adhesive sheet for fixing components of mobile electronic devices and for fixing electronic components.

EXAMPLES

The embodiments of the present disclosure will hereinafter be described more specifically by way of examples thereof. It should be understood that the present disclosure is not limited to these examples within the scope of the present disclosure. In the following examples, "parts" and "%" are based on weight.

The biomass degree, the regenerated carbon use percentage, the number-average molecular weight, the weight-average molecular weight, and the glass transition temperature of a polyester resin, and the gel fraction, the biomass degree, and the regenerated carbon use percentage of an adhesive agent layer in each of the examples were measured by the methods previously described.

Polyester resins were produced in the following manner.

[Production of Polyester Resins (A) (A-1 to A-10), and (A') (A'-1 to A'-3)]

Polycarboxylic acid compounds and polyols shown below in Table 1 were blended in a reaction can provided with a thermometer, a stirrer, a fractionating column, a nitrogen introduction tube, and a vacuum system, and a catalyst of tetrabutyl titanate was fed in an amount of 0.2 mmol per mol of the polycarboxylic acid compounds into the reaction can. The internal temperature of the reaction can was gradually increased to a temperature of 240°C to 250°C, and an esterification reaction was allowed to proceed for four hours. Thereafter, the internal temperature was increased to 260°C, and the catalyst of tetrabutyl titanate was fed in an amount of 0.2 mmol per mol of the polycarboxylic acid compounds into the reaction can. Then, the internal pressure of the reaction can was reduced to a pressure of 1.33 to 2.66 hPa, and a polymerization reaction was allowed to proceed for two to three hours. Thus, polyester resins (A) and (A') were produced.

The formulations and the physical properties of the polyester resins (A) and (A') thus produced are shown below in Table 2.

In the production, hydrogenated distilled dimer acid, 2,5-furandicarboxylic acid, sebacic acid, dimer diol, isosorbide, and 1,3-propane glycol were plant-derived materials. Terephthalic acid and ethylene glycol were partly derived from PET.

Table 1

| | Polyester resin | | | | | | | | | | | | |
|---|---|---|---|---|---|---|---|---|---|---|---|---|---|
| | A-1 | A-2 | A-3 | A-4 | A-5 | A-6 | A-7 | A-8 | A-9 | A-10 | A'-1 | A'-2 | A'-3 |
| Polycarboxylic acid compound | | | | | | | | | | | | | |
|     Hydrogenated distilled dimer acid (a1) | 629.7 | 575.1 | 575.1 | 499.9 | 507.2 | - | 535.9 | 520.0 | 489.9 | 428.0 | 674.4 | 480.8 | 491.1 |
|     TPA (a2) | - | - | 71.9 | - | - | - | - | - | - | - | - | - | - |
|     IPA (a2) | - | - | - | 66.3 | 121.05 | 37.7 | - | - | - | - | - | - | - |
|     FDCA (a2) | - | - | - | - | - | - | - | - | 44.7 | - | - | - | - |
|     SebA | - | - | - | 64.5 | - | 183.7 | - | - | - | - | - | - | 142.7 |
| PET | 37.5 | 83.2 | - | - | - | - | 45.2 | 58.5 | - | 48.1 | - | 162.2 | - |
| Polyol | | | | | | | | | | | | | |
|     EG | 125.1 | 125.3 | 152.2 | 168.4 | 170.8 | 77.5 | 109.5 | 109.6 | 56.9 | - | 124.9 | 125.7 | 165.4 |
|     TMP | 0.7 | 0.8 | 0.8 | 0.9 | 0.9 | 2.0 | 1.0 | 1.0 | 0.9 | 0.8 | 0.6 | 0.9 | 0.8 |
|     Dimer diol (a1) | - | - | - | - | - | 182.9 | - | - | - | - | - | - | - |
|     Isosorbide | - | - | - | - | - | 116.1 | - | - | - | - | - | - | - |
|     NPG | - | - | - | - | - | - | - | - | 107.5 | - | - | - | - |
|     PG | - | - | - | - | - | - | - | - | - | 129.6 | - | - | - |

TPA: terephthalic acid, IPA: isophthalic acid, FDCA: 2,5-furandicarboxylic acid, SebA: sebacic acid, PET: polyethylene terephthalate,
EG: ethylene glycol, TMP: trimethylolpropane, NPG: neopentyl glycol, PG: 1,3-propanediol
Note: In Table 1, numerals for respective materials indicate proportions in parts by weight.

Table 2

| | Polyester resin | | | | | | | | | | | | |
|---|---|---|---|---|---|---|---|---|---|---|---|---|---|
| | A-1 | A-2 | A-3 | A-4 | A-5 | A-6 | A-7 | A-8 | A-9 | A-10 | A'-1 | A'-2 | A'-3 |
| Structural unit derived from polycarboxylic acid compound | | | | | | | | | | | | | |
| Hydrogenated distilled dimer acid (a1) | 85 | 70 | 70 | 55 | 55 | - | 80 | 75 | 75 | 75 | 100 | 50 | 55 |
| TPA (a2) | - | - | 30 | - | - | - | - | - | - | - | - | - | - |
| IPA (a2) | - | - | - | 25 | 45 | 20 | - | - | - | - | - | - | - |
| FDCA (a2) | - | - | - | - | - | - | - | - | 25 | - | - | - | - |
| SebA | - | - | - | 20 | - | 80 | - | - | - | - | - | - | 45 |
| PET-derived TPA (a2) | 15 | 30 | - | - | - | - | 20 | 25 | - | 25 | - | 50 | - |
| Structural unit derived from polyol | | | | | | | | | | | | | |
| EG* | 99.6 | 99.6 | 99.6 | 99.6 | 99.6 | 27.3 | 99.4 | 99.4 | 45.6 | 13.2 | 99.6 | 99.6 | 99.6 |
| TMP | 0.4 | 0.4 | 0.4 | 0.4 | 0.4 | 0.6 | 0.6 | 0.6 | 0.6 | 0.6 | 0.4 | 0.4 | 0.4 |
| Dimer diol (a1) | - | - | - | - | - | 30 | - | - | - | - | - | - | - |
| Isosorbide | - | - | - | - | - | 42.1 | - | - | - | - | - | - | - |
| NPG | - | - | - | - | - | - | - | - | 53.8 | - | - | - | - |
| PG | - | - | - | - | - | - | - | - | - | 86.2 | - | - | - |
| Physical properties | | | | | | | | | | | | | |
| X1/X2 | 5.7 | 2.3 | 2.3 | 2.2 | 1.2 | 1.5 | 4 | 3 | 3 | 3 | - | 1 | - |
| Number-average molecular weight | 10700 | 10100 | 12000 | 13000 | 8000 | 14000 | 11000 | 11000 | 10000 | 11000 | 25000 | 12200 | 20000 |
| Weight-average molecular weight | 70800 | 63600 | 74000 | 133000 | 116000 | 100000 | 84000 | 78000 | 81000 | 93000 | 88000 | 67300 | 90000 |
| Biomass degree (%) | 90.5 | 85.1 | 85.1 | 84.4 | 77.9 | 89.4 | 88.8 | 87.0 | 88.8 | 92.8 | 94.7 | 75.0 | 92.3 |
| Regenerated carbon use percentage (%) | 94.6 | 94.4 | 85.1 | 84.4 | 77.9 | 89.4 | 94.5 | 94.4 | 88.8 | 99.9 | 94.7 | 94.0 | 92.3 |
| Glass transition temperature (°C) | -44 | -38 | -38 | -41 | -34 | -40 | -42 | -41 | -40 | -45 | -47 | -30 | -50 |
| TPA: terephthalic acid, IPA: isophthalic acid, FDCA: 2,5-furandicarboxylic acid, SebA: sebacic acid, PET: polyethylene terephthalate, EG: ethylene glycol, TMP: trimethylolpropane, NPG: neopentyl glycol, PG: 1,3-propanediol, *: EG including ethylene glycol derived from polyethylene terephthalate. Note: In Table 2, numerals for respective materials indicate molar concentrations of components of polyester resin. | | | | | | | | | | | | | |

Prior to production of adhesive compositions, the following ingredients were prepared.

[Polyisocyanate compound (B)]

- Polyisocyanate compound (B-1): CORONATE L55E (available from Tosoh Corporation) having a solid concentration of 55%

[Hydrolysis Inhibitor (C)]

- Carbodiimide compound (C-1): CARBODILITE V-09GB (available from Nisshinbo Chemical Inc.) having a solid concentration of 70%

[Tackifier (D)]

- Aromatic hydrocarbon resin (D-1): FTR6100 (available from Mitsui Chemicals, Inc.) having a softening point of 95°C
- Aromatic hydrocarbon resin (D-2): FTR6125 (available from Mitsui Chemicals, Inc.) having a softening point of 125°C
- Aromatic hydrocarbon resin (D-3): FMR0150 (available from Mitsui Chemicals, Inc.) having a softening point of 145°C
- Terpene phenol resin (D-4): YS POLYSTAR T130 (available from Yasuhara Chemical Co., Ltd.) having a softening point of 130°C
- Terpene phenol resin (D-5): YS POLYSTAR G150 (available from Yasuhara Chemical Co., Ltd.) having a softening point of 150°C
- Terpene phenol resin (D-6): YS POLYSTAR S145 (available from Yasuhara Chemical Co., Ltd.) having a softening point of 145°C

Adhesive compositions were produced as having formulations shown below in Tables 3 to 5 by using the polyester resins, the polyisocyanate compound, the hydrolysis inhibitor, and the tackifiers described above.

[Examples 1 to 14 and Comparative Examples 1 to 7]

The polyester resins (A-1) to (A-10) and (A'-1) to (A'-3) produced in the aforementioned manner were each diluted to a solid concentration of 50% with ethyl acetate. Then, the polyisocyanate compound (B-1) and the carbodiimide compound (C-1) were blended in proportions (solid proportions) shown in Table 3 or 4 with the resulting solution, and stirred to be mixed together. Thus, adhesive compositions were produced.

[Examples 15 to 22]

The polyester resin (A-8) produced in the aforementioned manner was diluted to a solid concentration of 50% with ethyl acetate. Then, the polyisocyanate compound (B-1), the carbodiimide compound (C-1), and the tackifiers (D-1) to (D-6) were blended in proportions (solid proportions) shown in Table 5 with the resulting solution. Further, 0.02 parts (solid content) of a zirconium compound diluted to a solid concentration of 1% with acetylacetone (ORGATIX ZC-150 available from Matsumoto Fine Chemical Co., Ltd.) was added as a urethanization catalyst to the resulting mixture, and stirred to be mixed together. Thus, adhesive compositions were produced.

The adhesive compositions of Examples 1 to 22 and Comparative Examples 1 to 7 produced in the aforementioned manner were each applied to a dry thickness of about 25 μm onto a polyethylene terephthalate (PET) film (having a thickness of 38 μm), and then dried at 100°C for 3 minutes to form an adhesive agent layer. Thereafter, a release-treated PET film (release film) was applied on the adhesive agent layer to protect the surface of the adhesive agent layer, and then the adhesive agent layer was aged in an atmosphere at a temperature of 40°C for 10 days. Thus, adhesive sheets were produced.

The adhesive compositions of Examples 15 to 22 produced in the aforementioned manner were each applied to a dry thickness of about 100 μm onto a release-treated PET film (release film, having a thickness of 38 μm), and then dried at 100°C for 3 minutes to form an adhesive agent layer. Thereafter, a release-treated PET film (release film) was applied on the adhesive agent layer to protect the surface of the adhesive agent layer, and then the adhesive agent layer was aged in an atmosphere at a temperature of 40°C for 10 days. Thus, adhesive sheets to be used for measurement of shear force were produced.

The adhesive sheets of Examples and Comparative Examples were each evaluated in the following manner. The results of the evaluation are shown below in Tables 3 to 5.

<Initial Adhesive Force (Peel Strength) with respect to SUS-BA>

A SUS-BA (stainless steel) plate was prepared as an adherend. After the adhesive sheets produced in the aforementioned manner were each cut to a size of 25 mm × 200 mm in an environment at 23°C at 50% RH to provide a test sample, the release film was removed from the test sample. Then, the adhesive agent layer of the test sample was brought into contact with the SUS-BA plate, and press-bonded to the SUS-BA plate by reciprocally moving a 2-kg roller on the test sample. After the resulting test sample was allowed to stand still in the same environment for 30 minutes, a 180-degree peel strength (N/25 mm) was measured at a peel rate of 300 mm/minute by means of an autograph (AUTOGRAPH AGS-H 500N available from Shimadzu Corporation), and a peeled state was visually observed.

<Adhesive Force (Peel Strength) with respect to SUS-BA after 72 hours>

A SUS-BA (stainless steel) plate was prepared as an adherend. After the adhesive sheets produced in the aforementioned manner were each cut to a size of 25 mm × 200 mm in an environment at 23°C at 50% RH to provide a test sample, the release film was removed from the test sample. Then, the adhesive agent layer of the test sample was brought into contact with the SUS-BA plate, and press-bonded to the SUS-BA plate by reciprocally moving a 2-kg roller on the test sample. After the resulting test sample was allowed to stand still in the same environment for 72 hours, a 180-degree peel strength (N/25 mm) was measured at a peel rate of 300 mm/minute by means of an autograph (AUTOGRAPH AGS-H 500N available from Shimadzu Corporation), and a peeled state was visually observed. The test sample was evaluated based on the following criteria:

(Evaluation Criteria)

∞ (excellent): The peel strength was not less than 20 N/25 mm, and interfacial peeling occurred.
○ (good): The peel strength was 20 N/25 mm or more, and cohesive failure occurred.
○ (good): The peel strength was 15 N/25 mm or more and 20 N/25 mm or less, and interfacial peeling occurred.
Δ (acceptable): The peel strength was 15 N/25 mm or more and 20 N/25 mm or less, and cohesive failure occurred.
× (unacceptable): The peel strength was 15 N/25 mm or less (irrespective of the peeled state).
<Initial Adhesive Force (Peel Strength) with respect to PP>

A polypropylene (PP) plate was prepared as an adherend. After the adhesive sheets produced in the aforementioned manner were each cut to a size of 25 mm × 200 mm in an environment at 23°C at 50% RH to provide a test sample, the release film was removed from the test sample. Then, the adhesive agent layer of the test sample was brought into contact with the PP plate, and press-bonded to the PP plate by reciprocally moving a 2-kg roller on the test sample. After the resulting test sample was allowed to stand still in the same environment for 30 minutes, a 180-degree peel strength (N/25 mm) was measured at a peel rate of 300 mm/minute by means of an autograph (AUTOGRAPH AGS-H 500N available from Shimadzu Corporation), and a peeled state was visually observed. The test sample was evaluated based on the following criteria:

(Evaluation Criteria)

o (good): The peel strength was 10 N/25 mm or more, and interfacial peeling occurred.
Δ (acceptable) : The peel strength was 10 N/25 mm or more, and cohesive failure occurred.
Δ (acceptable): The peel strength was 5 N/25 mm or more and 10 N/25 mm or less, and interfacial peeling occurred.
× (unacceptable) : The peel strength was 5 N/25 mm or more and 10 N/25 mm or less, and cohesive failure occurred.
× (unacceptable) : The peel strength was 5 N/25 mm or less irrespective of the peeled state.

<Holding Force (Cohesive Force)>

The adhesive sheets produced in the aforementioned manner were each evaluated in conformity with JIS Z0237 by using a SUS304 (stainless steel) plate as an adherend. The adhesive sheet was bonded to the SUS304 plate with a bonding area of 25 mm × 25 mm, and then allowed to stand still at 80°C for 20 minutes. While a load of 1 kg was applied to the adhesive sheet, time required for the adhesive sheet to drop was measured. Where the adhesive sheet did not drop in a 24-hour stand-still period, a displacement of the adhesive sheet was measured after the 24-hour stand-still period. The evaluation was based on the following criteria:

(Evaluation Criteria)

∞ (excellent): The adhesive sheet did not drop in the 24-hour stand-still period, and the displacement was not greater than 1 mm.
∘ (good): The adhesive sheet did not drop in the 24-hour stand-still period, and the displacement was greater than 1 mm.
× (unacceptable): The adhesive sheet dropped in the 24-hour stand-still period.

<Shear Force>

SUS (stainless steel) plates were prepared as adherends. After the adhesive sheets produced in the aforementioned manner for the measurement of the shear force were each cut to a size of 12.5 mm × 25 mm to provide a test sample, the release films were removed from the test sample. Then, the test sample was sandwiched and pressed between two SUS plates for 10 seconds with the use of a 10-kg weight to be thereby press-bonded to the SUS plates, and then aged at 23°C at a humidity of 50% for 48 hours. Thereafter, the two SUS plates were pulled apart from each other at a tensile speed of 10 mm/minute. A peel force (N) was measured when the test sample was separated from the SUS plates. The shear force (Pa) was calculated from the following expression:

```
Shear force (Pa) = Peel force (N)/Adhesive sheet area (m²)
```

The evaluation for the shear force thus calculated was based on the following criteria:

(Evaluation Criteria)

∞ (excellent): 0.5 MPa or more
∘ (good): 0.4 MPa or more and 0.5 MPa or less
Δ (acceptable): 0.2 MPa or more and 0.4 MPa or less
× (unacceptable): 0.2 MPa or more

Table 3

| | Example 1 | Example 2 | Example 3 | Example 4 | Example 5 | Example 6 | Example 7 |
|---|---|---|---|---|---|---|---|
| Adhesive Composition | | | | | | | |
| Polyester resin | A-1  100 | A-1  100 | A-2  100 | A-2  100 | A-3  100 | A-3  100 | A-4  100 |
| Polyisocyanate compound | B-1  1.5 | B-1  2 | B-1  1.5 | B-1  2 | B-1  1.5 | B-1  2 | B-1  1 |
| Hydrolysis inhibitor | C-1  1 | C-1  1 | C-1  1 | C-1  1 | C-1  1 | C-1  1 | C-1  1 |
| Physical properties | | | | | | | |
| Gel fraction (%) | 31 | 43 | 28 | 44 | 28 | 49 | 39 |
| Initial adhesive force with respect to SUS-BA | | | | | | | |
| Peel strength (N/25 mm) | 20 | 14 | 25 | 15 | 18 | 15 | 14 |
| Peeled state | Interfacial peeling | Interfacial peeling | Cohesive failure | Interfacial peeling | Interfacial peeling | Interfacial peeling | Interfacial peeling |
| Adhesive force with respect to SUS-BA after 72 hours | | | | | | | |
| Peel strength (N/25 mm) | 21 | 18 | 26 | 20 | 24 | 19 | 20 |
| Peeled state | Cohesive failure | Interfacial peeling | Cohesive failure | Interfacial peeling | Interfacial peeling | Interfacial peeling | Interfacial peeling |
| Evaluation | ○ | ○ | ○ | ○○ | ○○ | ○ | ○○ |
| Initial adhesive force with respect to PP | | | | | | | |
| Peel strength (N/25 mm) | 14 | 10 | 15 | 10 | 13 | 11 | 12 |
| Peeled state | Interfacial peeling | Interfacial peeling | Interfacial peeling | Interfacial peeling | Interfacial peeling | Interfacial peeling | Interfacial peeling |
| Evaluation | ○ | ○ | ○ | ○ | ○ | ○ | ○ |
| Holding force (Cohesive force) | | | | | | | |
| Time or displacement | 0 mm | 0 mm | 0 mm | 0 mm | 0 mm | 0 mm | 0 mm |
| Evaluation | ○○ | ○○ | ○○ | ○○ | ○○ | ○○ | ○○ |
| Biomass degree (%) | 88.3 | 87.9 | 83.0 | 82.6 | 83.0 | 82.6 | 82.7 |
| Regenerated carbon use percentage (%) | 92.3 | 91.8 | 92.1 | 91.7 | 83.0 | 82.6 | 82.7 |

Note: Numerals for adhesive composition indicate solid proportions in parts by weight.

Table 3 (continued)

| | Example 8 | Example 9 | Example 10 | Example 11 | Example 12 | Example 13 | Example 14 |
|---|---|---|---|---|---|---|---|
| Adhesive Composition | | | | | | | |
| Polyester resin | A-5  100 | A-6  100 | A-7  100 | A-8  100 | A-9  100 | A-10  100 | A-10  100 |
| Polyisocyanate compound | B-1  1 | B-1  2 | B-1  1.25 | B-1  1.25 | B-1  1.25 | B-1  1 | B-1  1.5 |
| Hydrolysis inhibitor | C-1  1 | C-1  1 | C-1  1 | C-1  1 | C-1  1 | C-1  1 | C-1  1 |
| Physical properties | | | | | | | |
| Gel fraction (%) | 36 | 46 | 31 | 35 | 40 | 25 | 44 |
| Initial adhesive force with respect to SUS-BA | | | | | | | |
| Peel strength (N/25 mm) | 15 | 14 | 15 | 14 | 14 | 19 | 12 |
| Peeled state | Interfacial peeling | Interfacial peeling | Interfacial peeling | Interfacial peeling | Interfacial peeling | Interfacial peeling | Interfacial peeling |
| Adhesive force with respect to SUS-BA after 72 hours | | | | | | | |
| Peel strength (N/25 mm) | 20 | 20 | 21 | 24 | 22 | 26 | 22 |
| Peeled state | Interfacial peeling | Interfacial peeling | Interfacial peeling | Interfacial peeling | Interfacial peeling | Interfacial peeling | Interfacial peeling |
| Evaluation | ○○ | ○○ | ○○ | ○○ | ○○ | ○○ | ○○ |
| Initial adhesive force with respect to PP | | | | | | | |
| Peel strength (N/25 mm) | 9 | 6 | 11 | 11 | 10 | 5 | 3 |
| Peeled state | Interfacial peeling | Interfacial peeling | Interfacial peeling | Interfacial peeling | Interfacial peeling | Interfacial peeling | Interfacial peeling |
| Evaluation | Δ | Δ | ○ | ○ | ○ | ○ | × |
| Holding force (Cohesive force) | | | | | | | |
| Time or displacement | 0 mm | 0 mm | 0.1 mm | 0.1 mm | 0 mm | 0.7 mm | 0 mm |
| Evaluation | ○○ | ○○ | ○○ | ○○ | ○○ | ○○ | ○○ |
| Biomass degree (%) | 76.4 | 86.8 | 86.8 | 85.1 | 86.8 | 91.0 | 90.5 |
| Regenerated carbon use percentage (%) | 76.4 | 86.8 | 92.4 | 92.3 | 86.8 | 97.9 | 97.5 |

Note: Numerals for adhesive composition indicate solid proportions in parts by weight.

Table 4

| | Comparative Example 1 | | Comparative Example 2 | | Comparative Example 3 | | Comparative Example 4 | | Comparative Example 5 | | Comparative Example 6 | | Comparative Example 7 | |
|---|---|---|---|---|---|---|---|---|---|---|---|---|---|---|
| **Adhesive Composition** | | | | | | | | | | | | | | |
| Polyester resin | A'-1 | 100 | A'-1 | 100 | A'-1 | 100 | A'-2 | 100 | A'-2 | 100 | A'-3 | 100 | A'-3 | 100 |
| Polyisocyanate compound | B-1 | 1 | B-1 | 1.5 | B-1 | 2 | B-1 | 1.5 | β-1 | 2 | B-1 | 1 | B-1 | 1.5 |
| Hydrolysis inhibitor | C-1 | 1 | C-1 | 1 | C-1 | 1 | C-1 | 1 | C-1 | 1 | C-1 | 1 | C-1 | 1 |
| **Physical properties** | | | | | | | | | | | | | | |
| Gel fraction (%) | 25 | | 38 | | 47 | | 26 | | 37 | | 24 | | 43 | |
| **Initial adhesive force with respect to SUS-BA** | | | | | | | | | | | | | | |
| Peel strength (N/25 mm) | 16 | | 11 | | 9 | | 5 | | 3 | | 16 | | 12 | |
| Peeled state | Cohesive failure | | Interfacial peeling | | Interfacial peeling | | Interfacial peeling | | Interfacial peeling | | Interfacial peeling | | Interfacial peeling | |
| **Adhesive force with respect to SUS-BA after 72 hours** | | | | | | | | | | | | | | |
| Peel strength (N/25 mm) | 16 | | 13 | | 12 | | 9 | | 7 | | 17 | | 13 | |
| Peeled state | Cohesive failure | | Interfacial peeling | | Interfacial peeling | | Interfacial peeling | | Interfacial peeling | | Interfacial peeling | | Interfacial peeling | |
| Evaluation | △ | | × | | × | | × | | × | | ○ | | × | |
| **Adhesive force with respect to PP** | | | | | | | | | | | | | | |
| Peel strength (N/25 mm) | 15 | | 13 | | 10 | | 0.4 | | 0.2 | | 12 | | 7 | |
| Peeled state | Cohesive failure | | Interfacial peeling | | Interfacial peeling | | Interfacial peeling | | Interfacial peeling | | Interfacial peeling | | Interfacial peeling | |
| Evaluation | △ | | ○ | | ○ | | × | | × | | ○ | | △ | |
| **Holding force (Cohesive force)** | | | | | | | | | | | | | | |
| Time or displacement | 237 min. | | 0.15 mm | | 0 mm | | 0 mm | | 0 mm | | 711 min. | | 0 mm | |
| Evaluation | × | | ◎ | | ◎ | | ◎ | | ◎ | | × | | ◎ | |
| Biomass degree (%) | 92.8 | | 92.4 | | 91.9 | | 73.2 | | 72.8 | | 90.5 | | 90.0 | |

(continued)

| Holding force (Cohesive force) | | | | | | |
|---|---|---|---|---|---|---|
| Regenerated carbon use percentage (%) | 92.8 | 92.4 | 91.9 | 91.7 | 91.3 | 90.5 | 90.0 |

Note: Numerals for adhesive composition indicate solid proportions in parts by weight.

Table 5

| | Example 15 | | Example 16 | | Example 17 | | Example 18 | | Example 19 | | Example 20 | | Example 21 | | Example 22 | |
|---|---|---|---|---|---|---|---|---|---|---|---|---|---|---|---|---|
| **Adhesive Composition** | | | | | | | | | | | | | | | | |
| Polyester resin | A-8 | 100 | A-8 | 100 | A-8 | 100 | A-8 | 100 | A-8 | 100 | A-8 | 100 | A-8 | 100 | A-8 | 100 |
| Polyisocyanate compound | B-1 | 1.5 | B-1 | 1.5 | B-1 | 1.35 | B-1 | 1.35 | B-1 | 1.5 | B-1 | 1.8 | B-1 | 2 | B-1 | 2.7 |
| Hydrolysis inhibitor | C-1 | 1 | C-1 | 1 | C-1 | 1 | C-1 | 1 | C-1 | 1 | C-1 | 1 | C-1 | 1 | C-1 | 1 |
| Tackifier | D-1 | 20 | D-2 | 20 | D-3 | 20 | D-3 | 30 | D-4 | 20 | D-5 | 20 | D-6 | 30 | D-6 | 50 |
| **Physical properties** | | | | | | | | | | | | | | | | |
| Gel fraction (%) | 41 | | 44 | | 39 | | 40 | | 38 | | 28 | | 40 | | 31 | |
| **Initial adhesive force with respect to SUS-BA** | | | | | | | | | | | | | | | | |
| Peel strength (N/25 mm) | 19 | | 19 | | 16 | | 14 | | 18 | | 17 | | 16 | | 18 | |
| Peeled state | Interfacial peeling | | Interfacial peeling | | Interfacial peeling | | Interfacial peeling | | Interfacial peeling | | Interfacial peeling | | Interfacial peeling | | Interfacial peeling | |
| **Adhesive force with respect to SUS-BA after 72 hours** | | | | | | | | | | | | | | | | |
| Peel strength (N/25 mm) | 26 | | 25 | | 23 | | 20 | | 25 | | 20 | | 20 | | 21 | |
| Peeled state | Interfacial peeling | | Interfacial peeling | | Interfacial peeling | | Interfacial peeling | | Interfacial peeling | | Interfacial peeling | | Interfacial peeling | | Interfacial peeling | |
| Evaluation | ∞ | | ∞ | | ∞ | | ∞ | | ∞ | | ∞ | | ∞ | | ∞ | |
| **Holding force (Cohesive force)** | | | | | | | | | | | | | | | | |
| Time or displacement | 0.2 mm | | 0.1 mm | | 0.5 mm | | 0 mm | | 0.3 mm | | 0.9 mm | | 0.5 mm | | 0.6 mm | |
| Evaluation | ∞ | | ∞ | | ∞ | | ∞ | | ∞ | | ∞ | | ∞ | | ∞ | |
| **Shear force** | | | | | | | | | | | | | | | | |
| Shear force (MPa) | 0.27 | | 0.30 | | 0.40 | | 0.63 | | 0.22 | | 1.0 | | 1.0 | | 1.4 | |
| Evaluation | Δ | | Δ | | ○ | | ∞ | | Δ | | ∞ | | ∞ | | ∞ | |

EP 4 105 292 A1

(continued)

| Shear force | | | | | | | | |
|---|---|---|---|---|---|---|---|---|
| Biomass degree (%) | 71.0 | 71.0 | 71.1 | 65.7 | 79.2 | 79.0 | 76.7 | 72.9 |
| Regenerated carbon use percentage (%) | 77.1 | 77.1 | 77.2 | 71.3 | 85.2 | 85.0 | 82.3 | 77.7 |
| Note: Numerals for adhesive composition indicate solid proportions in parts by weight. | | | | | | | | |

The results shown in Table 3 indicate that the adhesive sheets of Examples 1 to 14 were excellent in initial adhesiveness and long-term adhesiveness to the metal adherend, and each had desired adhesiveness to the polyolefin resin adherend (poor-adhesion adherend), ensuring proper balance between the adhesive force and the holding force.

Further, the results shown in Table 5 indicate that the adhesive sheets of Examples 15 to 22 were excellent in initial adhesiveness and long-term adhesiveness to the metal adherend, and were excellent in shear force, ensuring proper balance between the adhesive force and the holding force, and among the adhesive force, the holding force, and the shear force.

On the other hand, the results shown in Table 4 indicate that the adhesive sheets of Comparative Examples 1 to 3 in which the aromatic dicarboxylic acid was not contained and only the dimer acid was contained as the polycarboxylic acid compound of the copolymerization component were particularly poorer in long-term adhesive force, that the adhesive sheets of Comparative Examples 4 and 5 in which a greater proportion of the aromatic dicarboxylic acid was contained were poorer in adhesive properties with respect to the metal adherend and the polyolefin adherend, and that the adhesive sheets of Comparative Examples 6 and 7 in which the aromatic dicarboxylic acid was not contained but the aliphatic dicarboxylic acid and the dimer acid were contained were poorly balanced between the strong adhesive force and the holding force, failing to provide the effects of the present disclosure.

While specific forms of the embodiments of the present disclosure have been shown in the aforementioned examples, the examples are merely illustrative and not limitative. It is contemplated that various modifications apparent to those skilled in the art could be made within the scope of the disclosure.

The adhesive agent of the present disclosure is highly effective in providing excellent adhesive properties with respect to a variety of adherends such as metals and plastics, even though being produced by using a polyester resin having a higher biomass degree. The adhesive agent of the present disclosure can be used for a single-sided or double-sided adhesive sheet for bonding optical components, and for a single-sided or double-sided adhesive sheet for fixing components of mobile electronic devices and fixing electronic components.

**Claims**

1. An adhesive composition comprising a polyester resin (A),
   wherein the polyester resin (A) comprises:

   a structural unit derived from at least one compound (a1) selected from the group consisting of a dimer acid compound and a dimer diol; and
   a structural unit derived from an aromatic compound (a2), and
   wherein a ratio (X1/X2) of a molar concentration (X1) of the structural unit derived from the compound (a1) to a molar concentration (X2) of the structural unit derived from the aromatic compound (a2) is greater than 1.0.

2. The adhesive composition according to claim 1, wherein the ratio (X1/X2) is 1.8 or more.

3. The adhesive composition according to claim 1 or 2, wherein the aromatic compound (a2) comprises an aromatic polycarboxylic acid compound.

4. The adhesive composition according to any one of claims 1 to 3, wherein the aromatic compound (a2) comprises a terephthalic acid compound derived from polyethylene terephthalate.

5. The adhesive composition according to any one of claims 1 to 4, wherein the polyester resin (A) has a number-average molecular weight of 3,000 or more.

6. The adhesive composition according to any one of claims 1 to 5, wherein the polyester resin (A) has a weight-average molecular weight of 10,000 or more.

7. The adhesive composition according to any one of claims 1 to 6, further comprising 2 to 200 parts by weight of a tackifier (D) based on 100 parts by weight of the polyester resin (A).

8. The adhesive composition according to claim 7, wherein the tackifier (D) has a softening point of 80°C to 170°C.

9. The adhesive composition according to claim 7 or 8, wherein the tackifier (D) comprises an aromatic structural unit.

10. The adhesive composition according to any one of claims 1 to 9, further comprising a polyisocyanate compound (B) .

**11.** The adhesive composition according to any one of claims 1 to 10, further comprising a hydrolysis inhibitor (C) .

**12.** The adhesive composition according to any one of claims 1 to 11, which has a biomass degree of 50% or more.

**13.** An adhesive agent prepared by crosslinking the adhesive composition according to any one of claims 1 to 12.

**14.** An adhesive sheet comprising an adhesive agent layer comprising the adhesive agent according to claim 13.

**15.** A double-sided adhesive sheet comprising an adhesive agent layer comprising the adhesive agent according to claim 13.

## INTERNATIONAL SEARCH REPORT

| | International application No. |
|---|---|
| | PCT/JP2021/005053 |

A. CLASSIFICATION OF SUBJECT MATTER
C09J 11/06(2006.01)i; C09J 167/00(2006.01)i; C09J 167/02(2006.01)i; C09J
167/03(2006.01)i; C09J 175/06(2006.01)i; C09J 7/38(2018.01)i
FI: C09J167/00; C09J167/03; C09J11/06; C09J7/38; C09J175/06; C09J167/02
According to International Patent Classification (IPC) or to both national classification and IPC

B. FIELDS SEARCHED

Minimum documentation searched (classification system followed by classification symbols)
C09J11/06; C09J167/00; C09J167/02; C09J167/03; C09J175/06; C09J7/38

Documentation searched other than minimum documentation to the extent that such documents are included in the fields searched
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2018-123269 A (TOYO INK SC HOLDINGS CO., LTD.) 09 August 2018 (2018-08-09) claims, paragraphs [0093], [0094], table 2, paragraphs [0125], [0140] | 1-3, 5-15 |
| X | JP 2019-172809 A (TOYOBO CO., LTD.) 10 October 2019 (2019-10-10) claims, paragraphs [0073], [0089]-[0104] | 1-3, 5-15 |
| P, A | WO 2020/110882 A1 (DIC CORPORATION) 04 June 2020 (2020-06-04) entire text | 1-15 |
| A | JP 2008-297475 A (TOYO INK MANUFACTURING CO., LTD.) 11 December 2008 (2008-12-11) entire text | 1-15 |
| A | JP 2008-297405 A (TOYO INK MANUFACTURING CO., LTD.) 11 December 2008 (2008-12-11) entire text | 1-15 |
| A | JP 2015-196822 A (NITTO DENKO CORP.) 09 November 2015 (2015-11-09) entire text | 1-15 |

☐ Further documents are listed in the continuation of Box C.        ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21 April 2021 (21.04.2021) | 11 May 2021 (11.05.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| International application No. |
| --- |
| PCT/JP2021/005053 |

| Patent Documents referred in the Report | Publication Date | Patent Family | Publication Date |
| --- | --- | --- | --- |
| JP 2018-123269 A | 09 Aug. 2018 | CN 108384495 A<br>KR 10-2018-0090739 A<br>TW 201829691 A | |
| JP 2019-172809 A | 10 Oct. 2019 | (Family: none) | |
| WO 2020/110882 A1 | 04 Jun. 2020 | (Family: none) | |
| JP 2008-297475 A | 11 Dec. 2008 | (Family: none) | |
| JP 2008-297405 A | 11 Dec. 2008 | (Family: none) | |
| JP 2015-196822 A | 09 Nov. 2015 | US 2017/0029675 A1<br>full text<br>WO 2015/151551 A1<br>entire text<br>TW 201538665 A<br>CN 106170526 A<br>KR 10-2016-0142284 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI41992328186 A

- JP 2014169419 A